# EUROPEAN PATENT APPLICATION

(11) **EP 4 765 948 A1**
(43) Date of publication of application: **24.06.2026**
(21) Application number: 25821296.8
(22) Date of filing: 12.06.2025
(51) Int. Cl.: H04W 36/00

(54) **COMMUNICATION METHOD, COMMUNICATION APPARATUS, AND ELECTRONIC DEVICE AND READABLE STORAGE MEDIUM**

(30) Priority: 14.06.2024 CN 202410778360
(71) Applicant: HUAWEI TECHNOLOGIES CO., LTD., Shenzhen 518129 (CN)
(72) Inventor: LI, Shiwei, Shenzhen, Guangdong 518129 (CN); YE, Jianbo, Shenzhen, Guangdong 518129 (CN); YAN, Bin, Shenzhen, Guangdong 518129 (CN); LU, Wei, Shenzhen, Guangdong 518129 (CN)
(74) Representative: Körber, Martin Hans
(86) International application number: PCT/CN2025/100664
(87) International publication number: WO 2025/256590

(57) **Abstract**

This application provides a communication method, a communication apparatus, an electronic device, and a readable storage medium. The electronic device establishes a satellite communication connection to a satellite. The electronic device receives a cellular signal, where the cellular signal includes a first cellular signal type. The electronic device determines whether the first cellular signal type is the same as a second cellular signal type in the electronic device. If the first cellular signal type is the same as the second cellular signal type in the electronic device, the electronic device prompts a user whether to switch to a first cellular network. The electronic device receives and responds to a first operation of the user, disconnects the satellite communication connection from the satellite, and switches to the first cellular network. After establishing the communication connection to the satellite, a signal type of the received cellular signal is detected, and the user is prompted whether to switch to the cellular network.

## Description

This application claims priority to Chinese Patent Application No. 202410778360.8, filed with the China National Intellectual Property Administration on June 14, 2024, and entitled "COMMUNICATION METHOD, COMMUNICATION APPARATUS, ELECTRONIC DEVICE, AND READABLE STORAGE MEDIUM", which is incorporated herein by reference in its entirety.

### TECHNICAL FIELD

This application relates to the field of electronic technologies, and in particular, to a communication method, a communication apparatus, an electronic device, and a readable storage medium.

### BACKGROUND

With development of communication technologies, users often use electronic devices such as mobile phones to perform communication in daily life. The electronic devices such as the mobile phones may implement a communication function outdoors through a mobile cellular network. However, the cellular network cannot cover all areas. For example, there may be areas that are not covered by the mobile cellular network in forests, deserts, mountainous areas, cities, and villages. When the user is in the area that is not covered by the mobile cellular network, a terminal device like a mobile phone carried by the user cannot provide a communication service because there is no cellular signal.

A satellite communication system is an important infrastructure that integrates positioning, timing, and communication. A satellite communication service is particularly applicable to communication in an area that is not covered by mobile communication, or that cannot be covered by mobile communication, or in which a communication system is damaged.

Currently, the electronic devices can communicate with each other, send SMS messages, and the like through the satellite communication system. If the user needs to switch to the cellular network, the user needs to manually disable a satellite communication connection. This is inconvenient for the user.

### SUMMARY

This application provides a communication method, a communication apparatus, an electronic device, and a readable storage medium, so that after the electronic device establishes a communication connection to a satellite, the electronic device may detect a signal type of a received cellular signal, to prompt a user whether to switch to a cellular network.

According to a first aspect, this application provides a communication method. The method includes: An electronic device establishes a satellite communication connection to a satellite; the electronic device receives a cellular signal, where the cellular signal includes a first cellular signal type; the electronic device determines whether the first cellular signal type is the same as a second cellular signal type in the electronic device; if the first cellular signal type is the same as the second cellular signal type in the electronic device, the electronic device prompts a user whether to switch to a first cellular network; and the electronic device receives and responds to a first operation of the user, disconnects the satellite communication connection from the satellite, and switches to the first cellular network.

For example, the first cellular signal type may include at least any one of the following: a China Mobile signal, a China Unicom signal, and a China Telecom signal.

According to the method, after the electronic device establishes the communication connection to the satellite, the electronic device may detect the first cellular signal type of the received cellular signal, and when the first cellular signal type is the same as the second cellular signal type in the electronic device, the electronic device prompts the user to switch to the cellular network.

With reference to the first aspect, in a possible implementation, that the electronic device prompts the user whether to switch to the first cellular network specifically includes: If the first cellular signal type is the same as the second cellular signal type, and a signal strength of the cellular signal is greater than a first threshold, the electronic device prompts the user whether to switch to the first cellular network.

In this way, when the cellular signal strength is strong, the user may be prompted to switch to the cellular network, to improve user experience of using the cellular network.

With reference to the first aspect, in a possible implementation, that the electronic device receives the cellular signal specifically includes: The electronic device receives the cellular signal when the satellite communication connection of the electronic device is in an idle state.

In this way, when the satellite communication connection of the electronic device is in the idle state, the electronic device receives the cellular signal, so that power consumption can be reduced.

With reference to the first aspect, in a possible implementation, that the electronic device prompts the user whether to switch to the first cellular network specifically includes: When the satellite communication connection of the electronic device is in the idle state, the electronic device prompts the user whether to switch to the first cellular network.

In this way, when the satellite communication connection of the electronic device is in the idle state, the electronic device prompts the user whether to switch to the first cellular network, so that power consumption can be reduced.

With reference to the first aspect, in a possible implementation, that the electronic device disconnects the satellite communication connection from the satellite, and switches to the first cellular network specifically includes: When the satellite communication connection of the electronic device is in the idle state, the electronic device disconnects the satellite communication connection from the satellite, and switches to the first cellular network.

In this way, when the satellite communication connection of the electronic device is in the idle state, the electronic device disconnects the satellite communication connection from the satellite, to avoid affecting a satellite service, for example, a satellite call, sending a satellite SMS message, or receiving a satellite SMS message.

With reference to the first aspect, in a possible implementation, the second cellular signal type in the electronic device is a cellular signal type corresponding to a SIM card in the electronic device or a cellular signal type corresponding to an eSIM card in the electronic device.

With reference to the first aspect, in a possible implementation, the electronic device includes a cellular modem, the cellular modem includes a satellite modem, and that the electronic device receives the cellular signal when the satellite communication connection of the electronic device is in the idle state specifically includes: The satellite modem of the electronic device sends a first instruction to the cellular modem when the satellite communication connection of the electronic device is the idle state; and the cellular modem of the electronic device receives the cellular signal in response to the first instruction.

With reference to the first aspect, in a possible implementation, the electronic device includes the cellular modem, and the cellular modem includes the satellite modem; that the electronic device establishes the satellite communication connection to the satellite specifically includes: The satellite modem of the electronic device establishes the satellite communication connection to the satellite; and that the electronic device disconnects the satellite communication connection from the satellite, and switches to the first cellular network specifically includes: The satellite modem of the electronic device disconnects the satellite communication connection from the satellite, and the cellular modem of the electronic device switches to the first cellular network.

With reference to the first aspect, in a possible implementation, when the satellite modem of the electronic device establishes the satellite communication connection to the satellite, both the satellite modem and the cellular modem are in a power-on state.

With reference to the first aspect, in a possible implementation, the electronic device further includes a cellular wireless communication interface module and a first application; and
that the electronic device prompts the user whether to switch to the first cellular network specifically includes: The cellular modem of the electronic device sends a first message to the cellular wireless communication interface module; the cellular wireless communication interface module of the electronic device sends the first message to the first application; and in response to the first message, the first application of the electronic device prompts the user whether to switch to the cellular network.

With reference to the first aspect, in a possible implementation, the first application is a satellite setting application or a system setting device.

With reference to the first aspect, in a possible implementation, that the electronic device receives and responds to the first operation of the user, disconnects the satellite communication connection from the satellite, and switches to the first cellular network specifically includes: The electronic device receives and responds to the first operation of the user, and the first application of the electronic device sends a second message to the cellular wireless communication interface module; the cellular wireless communication interface module of the electronic device sends the second message to the cellular modem; in response to the second message, the cellular modem of the electronic device sends a second instruction to the satellite modem; in response to the second instruction, the satellite modem of the electronic device disconnects the satellite communication connection from the satellite; and the cellular modem of the electronic device switches to the first cellular network.

With reference to the first aspect, in a possible implementation, when the satellite modem of the electronic device disconnects the satellite communication connection from the satellite, and the cellular modem of the electronic device switches to the first cellular network, the cellular modem is in the powered-on state, and the satellite modem is in a powered-off state or the powered-on state.

With reference to the first aspect, in a possible implementation, that the satellite communication connection of the electronic device is in the idle state includes: There is no to-be-transmitted data between the electronic device and the satellite.

With reference to the first aspect, in a possible implementation, that the satellite communication connection of the electronic device is in the idle state includes: The electronic device does not establish a satellite call with another device by using the satellite, or the electronic device does not send an SMS message to another electronic device by using the satellite, or the electronic device does not receive, by using the satellite, an SMS message sent by another electronic device.

With reference to the first aspect, in a possible implementation, when the electronic device establishes the satellite communication connection to the satellite by using the satellite modem, the electronic device displays a first widget, where the first widget includes a first indicator and first prompt information, the first indicator indicates a connection status between a first electronic device and the satellite, and the first prompt information is used to prompt the user to maintain or adjust a current posture of holding the first electronic device to align with a satellite device; and/or the electronic device displays a first capsule, where the first capsule includes a connection status between the first electronic device and the satellite; and when the electronic device disconnects the satellite communication connection from the satellite by using the satellite modem, the electronic device stops displaying the first widget or the first capsule.

According to a second aspect, this application provides a communication apparatus. The apparatus includes a cellular modem and a first application, and the cellular modem includes a satellite modem, where the satellite modem is configured to establish a satellite communication connection to a satellite; the cellular modem is configured to receive a cellular signal, where the cellular signal includes a first cellular signal type; the cellular modem is further configured to determine whether the first cellular signal type is the same as a second cellular signal type in an electronic device; the first application is configured to: if the first cellular signal type is the same as the second cellular signal type in the electronic device, prompt a user whether to switch to a first cellular network; and the first application is further configured to: receive and respond to a first operation of the user, control the satellite modem to disconnect the satellite communication connection from the satellite, and control the cellular modem to switch to the first cellular network.

With reference to the second aspect, in a possible implementation, the first application is specifically configured to: if the first cellular signal type is the same as the second cellular signal type, and a signal strength of the cellular signal is greater than a first threshold, prompt the user whether to switch to the first cellular network.

With reference to the second aspect, in a possible implementation, the cellular modem is specifically configured to receive the cellular signal when the satellite communication connection of the electronic device is in an idle state.

With reference to the second aspect, in a possible implementation, the first application is specifically configured to: when the satellite communication connection of the electronic device is in the idle state, prompt the user whether to switch to the first cellular network.

With reference to the second aspect, in a possible implementation, the first application is specifically configured to: when the satellite communication connection of the electronic device is in the idle state, control the satellite modem to disconnect the satellite communication connection from the satellite, and control the cellular modem to switch to the first cellular network.

With reference to the second aspect, in a possible implementation, the second cellular signal type in the electronic device is a cellular signal type corresponding to a SIM card in the electronic device or a cellular signal type corresponding to an eSIM card in the electronic device.

With reference to the second aspect, in a possible implementation, the satellite modem is further configured to send a first instruction to the cellular modem when the satellite communication connection of the electronic device is in the idle state; and the cellular modem is specifically configured to receive the cellular signal in response to the first instruction.

With reference to the second aspect, in a possible implementation, when the satellite modem of the electronic device establishes the satellite communication connection to the satellite, both the satellite modem and the cellular modem are in a power-on state.

With reference to the second aspect, in a possible implementation, the electronic device further includes a cellular wireless communication interface module, where the cellular modem is further configured to send a first message to the cellular wireless communication interface module; the cellular wireless communication interface module is configured to send the first message to the first application; and the first application is specifically configured to prompt, in response to the first message, the user whether to switch to the cellular network.

With reference to the second aspect, in a possible implementation, the first application is a satellite setting application or a system setting device.

With reference to the second aspect, in a possible implementation, the electronic device further includes the cellular wireless communication interface module, where the first application is specifically configured to send a second message to the cellular wireless communication interface module in response to the first operation of the user; the cellular wireless communication interface module is configured to send the second message to the cellular modem; the cellular modem is further configured to send a second instruction to the satellite modem; and the satellite modem is specifically configured to disconnect the satellite communication connection from the satellite in response to the second instruction.

With reference to the second aspect, in a possible implementation, when the satellite modem of the electronic device disconnects the satellite communication connection from the satellite, and the cellular modem of the electronic device switches to the first cellular network, the cellular modem is in the power-on state, and the satellite modem is in a power-off state or the power-on state.

With reference to the second aspect, in a possible implementation, that the satellite communication connection of the electronic device is in the idle state includes: There is no to-be-transmitted data between the electronic device and the satellite.

With reference to the second aspect, in a possible implementation, that the satellite communication connection of the electronic device is in the idle state includes: The electronic device does not establish a satellite call with another device by using the satellite, or the electronic device does not send an SMS message to another electronic device by using the satellite, or the electronic device does not receive, by using the satellite, an SMS message sent by another electronic device.

According to a third aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method according to any possible implementation of the first aspect.

According to a fourth aspect, this application provides a computer-readable storage medium, including instructions. When the instructions are run on an electronic device, the electronic device is enabled to perform the method according to any possible implementation of the first aspect.

According to a fifth aspect, this application provides a computer program product. The computer program product may include computer instructions. When the computer instructions are run on an electronic device, the electronic device is enabled to perform the method according to any possible implementation of the first aspect.

According to a sixth aspect, this application provides a chip. The chip is applied to an electronic device, the chip includes one or more processors, and the processor is configured to invoke computer instructions, so that the electronic device performs the method according to any possible implementation of the first aspect.

According to a seventh aspect, this application provides a communication apparatus. The apparatus includes a satellite modem, a cellular modem, and an interface circuit. The interface circuit is configured to receive code instructions and transmit the code instructions to the satellite modem and/or the cellular modem. When the satellite modem and/or the cellular modem run/runs the code instructions, the electronic device is enabled to perform the method according to any possible implementation of the first aspect.

It may be understood that the communication apparatus provided in the second aspect, the electronic device provided in the third aspect, the computer readable storage medium provided in the fourth aspect, the computer program product provided in the fifth aspect, the chip provided in the sixth aspect, and the communication apparatus provided in the seventh aspect are all configured to perform the method provided in embodiments of this application. Therefore, for beneficial effects that can be achieved by the communication apparatus provided in the second aspect, the electronic device provided in the third aspect, the computer readable storage medium provided in the fourth aspect, the computer program product provided in the fifth aspect, the chip provided in the sixth aspect, and the communication apparatus provided in the seventh aspect, refer to the beneficial effects in the corresponding methods. Details are not described herein again.

### BRIEF DESCRIPTION OF DRAWINGS

FIG. 1A-1 to FIG. 1A-3 are a diagram of a software structure of an electronic device 100;
FIG. 1B is a diagram of mutual communication between an electronic device 100 and a satellite 200;
FIG. 1C is another diagram of mutual communication between an electronic device 100 and a base station 300;
FIG. 1D is a diagram of a satellite communication system 10;
FIG. 1E is a diagram of a hardware structure of an electronic device 100 according to this application;
FIG. 1F-1 to FIG. 1F-3 are a diagram of a software architecture of an electronic device 100 according to an embodiment of this application;

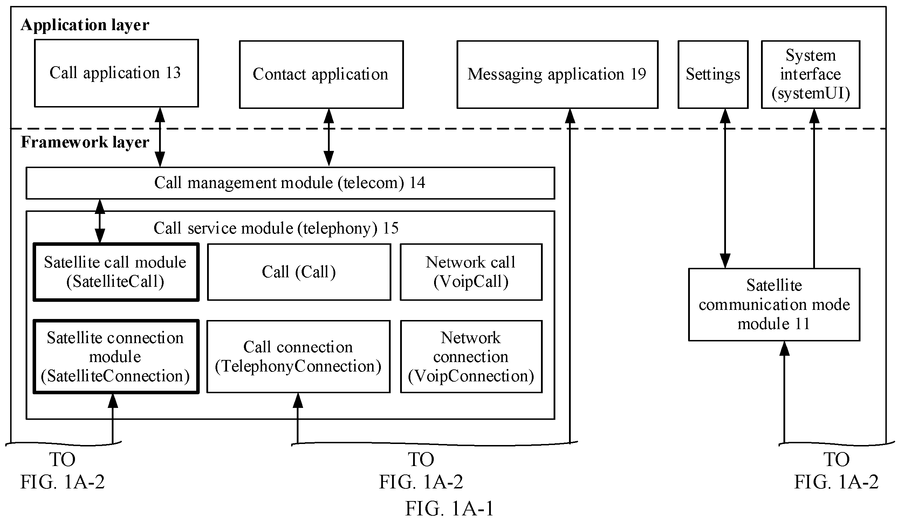

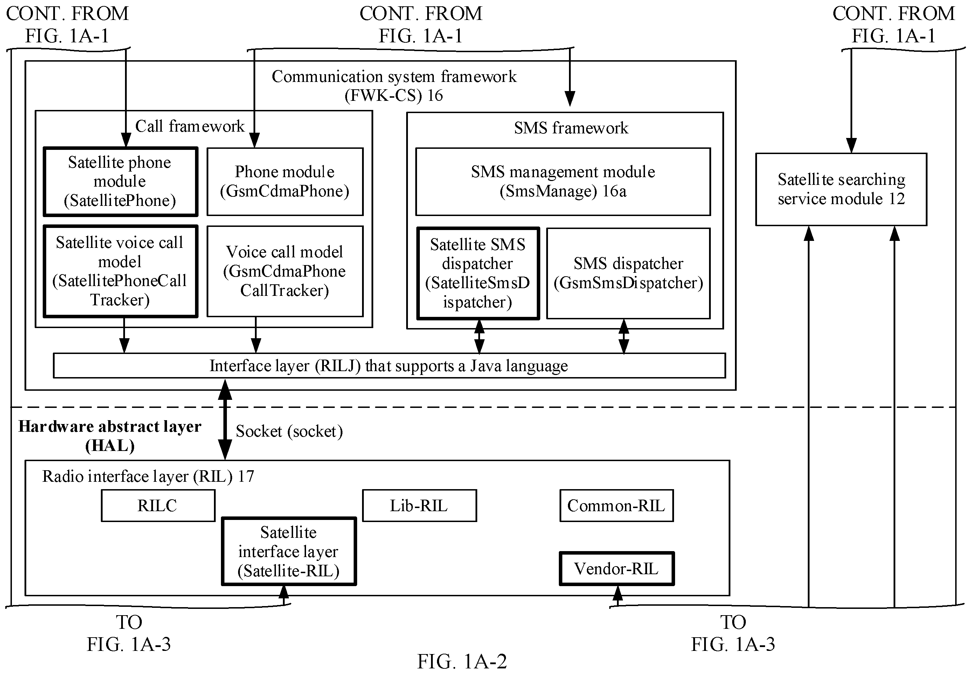

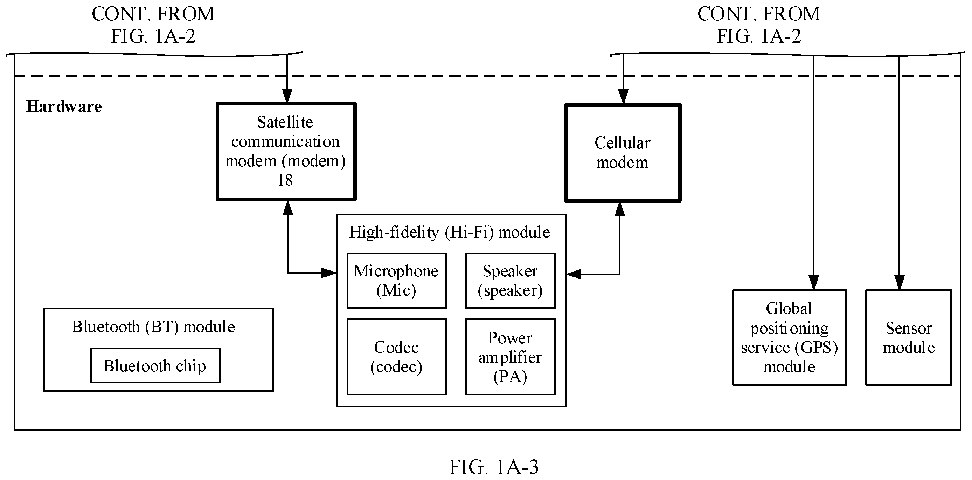

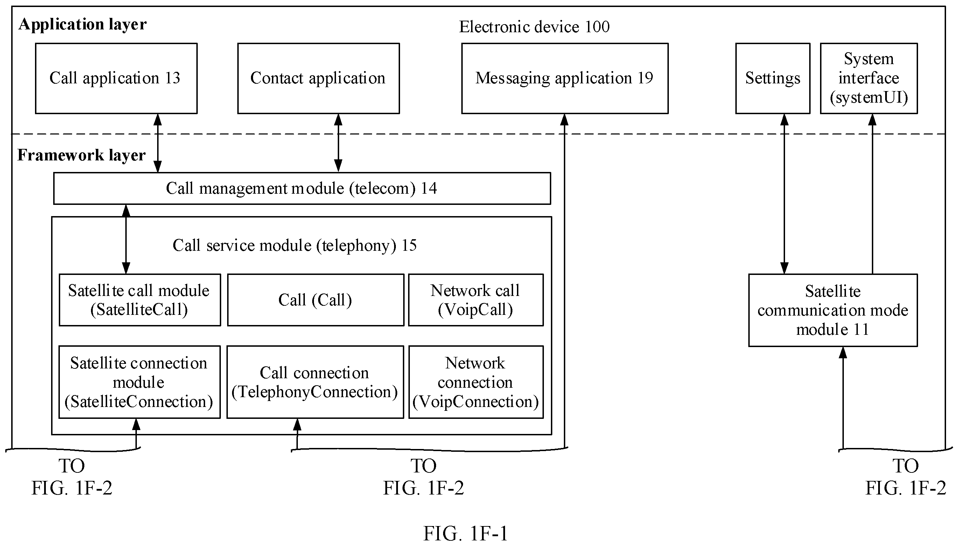

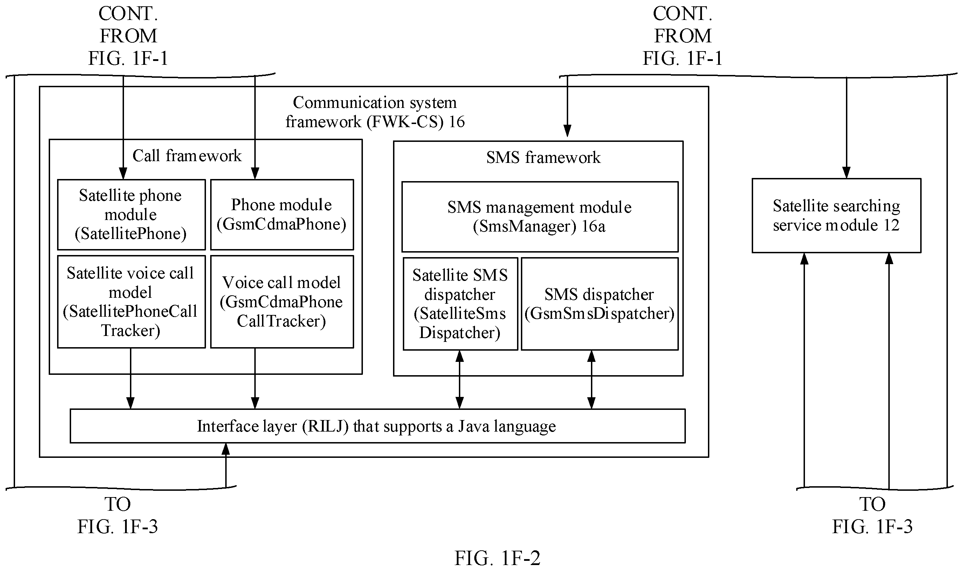

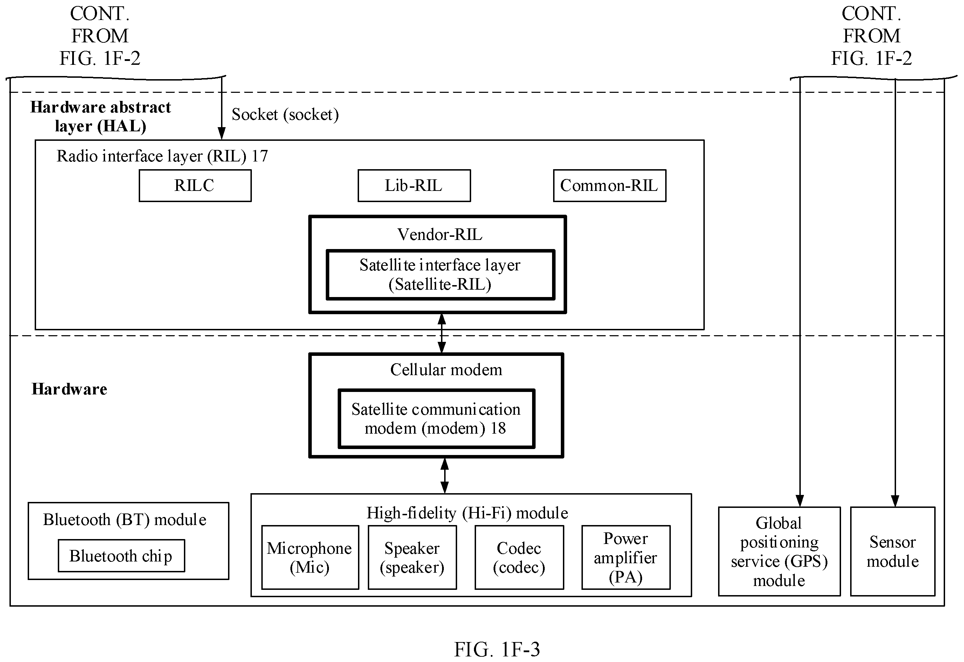

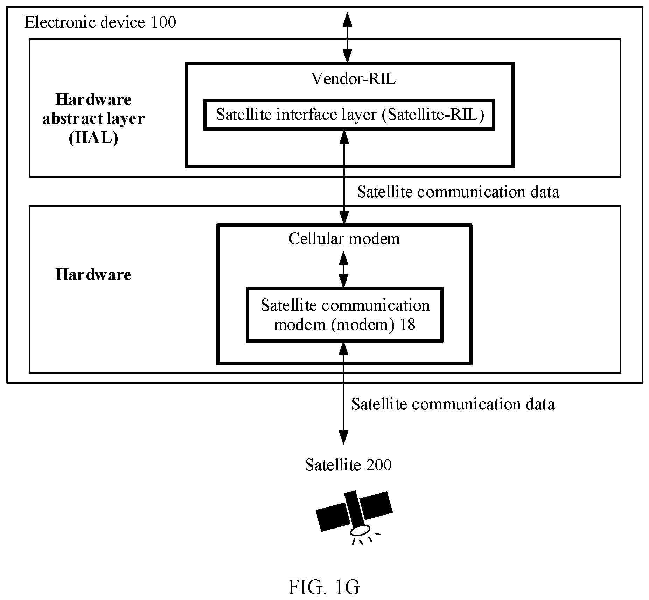

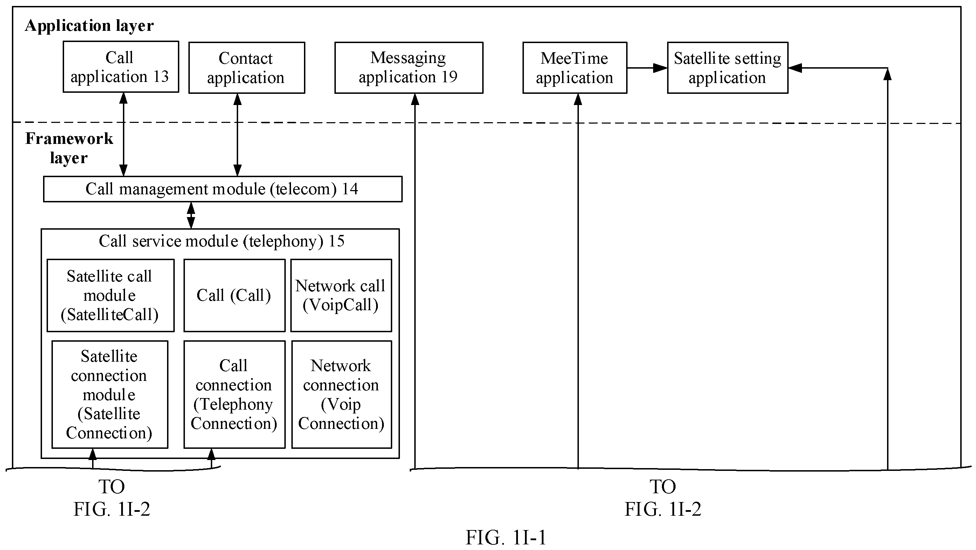

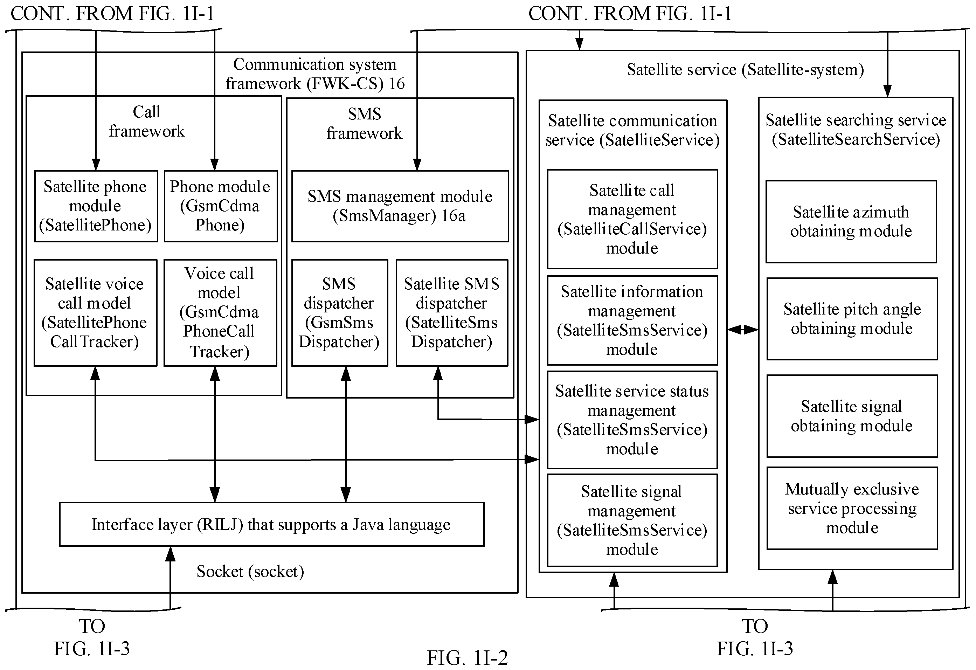

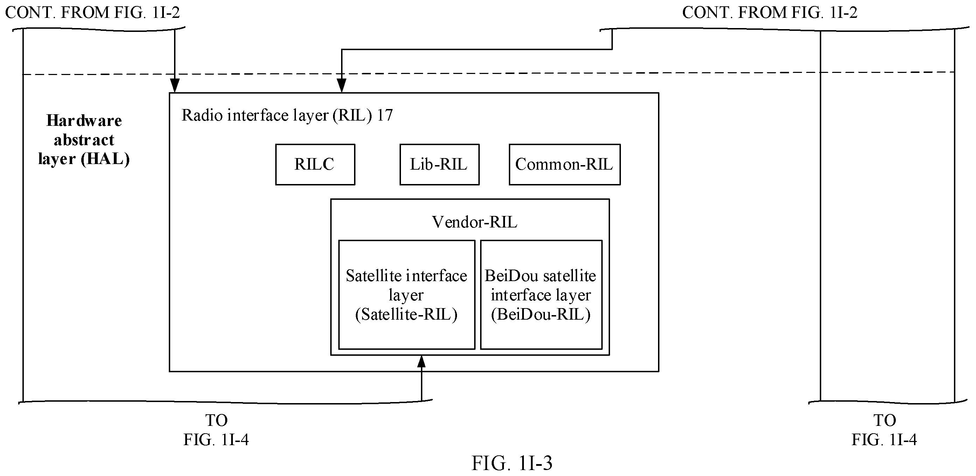

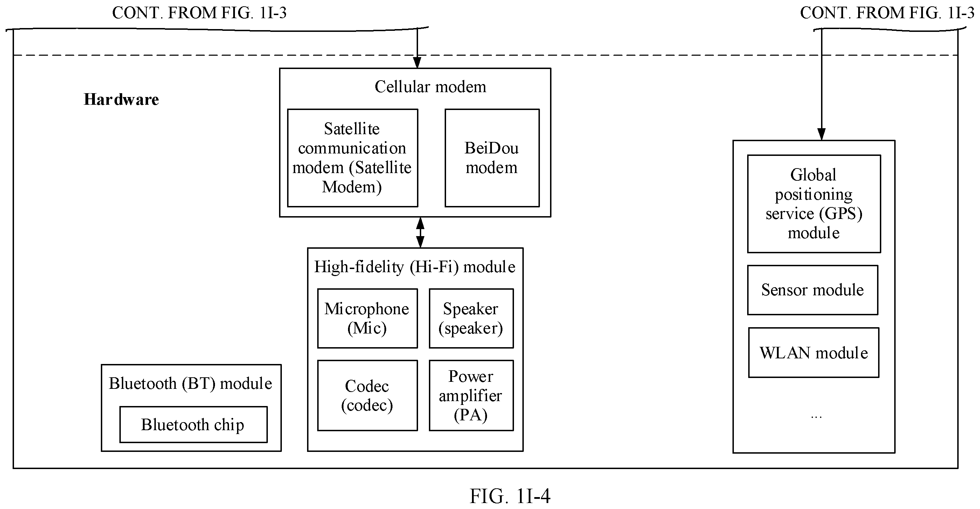

FIG. 1G is another diagram of mutual communication between an electronic device 100 and a satellite 200;

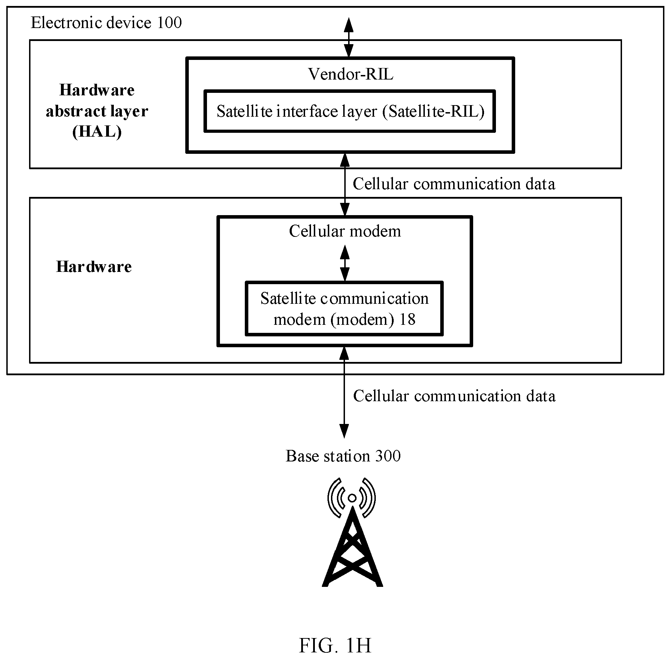

FIG. 1H is still another diagram of mutual communication between an electronic device 100 and a base station 300;
FIG. 1I-1 to FIG. 1I-4 are a diagram of another software architecture of an electronic device 100 according to an embodiment of this application;

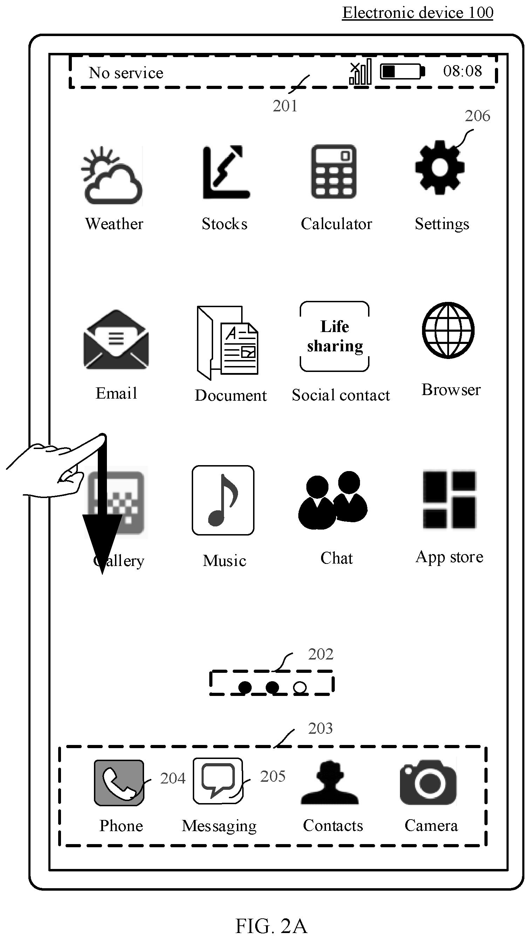

FIG. 2A to FIG. 2I are UI diagrams in which an electronic device 100 establishes a satellite communication connection to an electronic device 400 based on a satellite device;

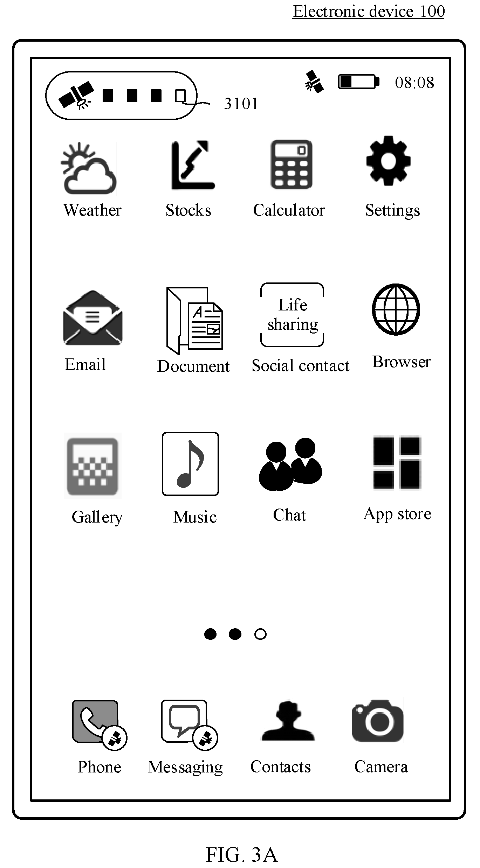

FIG. 3A to FIG. 3H are UI diagrams in which an electronic device 100 may prompt, after establishing a satellite communication connection to a satellite 200, a user to switch to a cellular network;

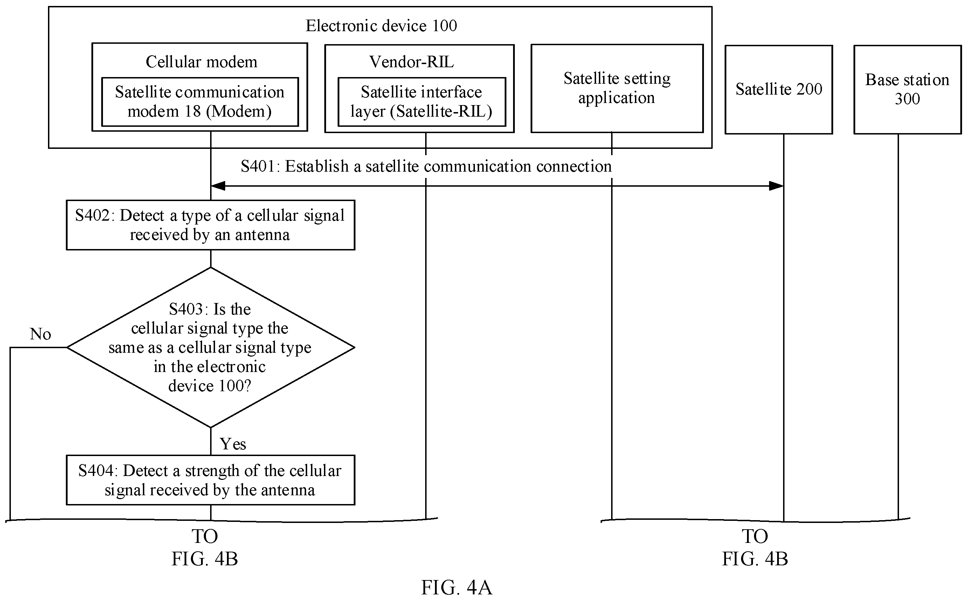

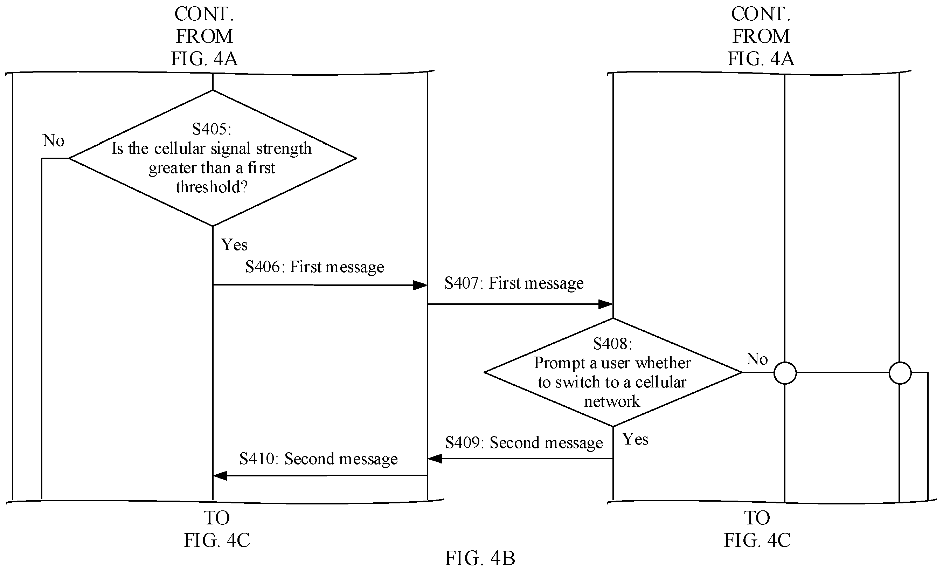

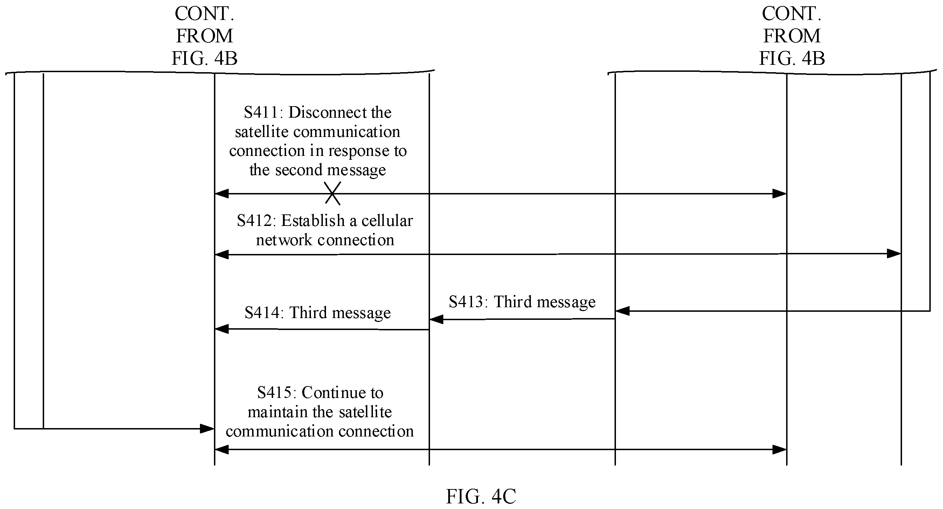

FIG. 4A to FIG. 4C are a schematic flowchart of a method for prompting, by an electronic device 100 after the electronic device 100 establishes a satellite communication connection to a satellite 200, a user whether to switch to a cellular network;

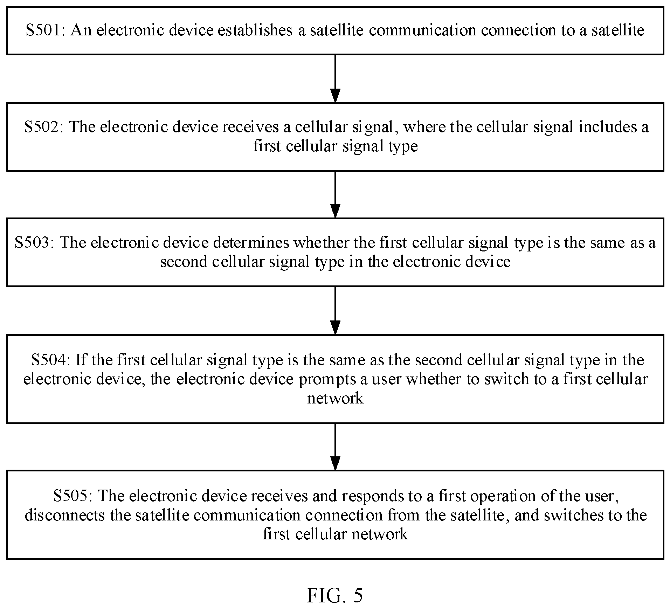

FIG. 5 is a schematic flowchart of a communication method according to this application; and

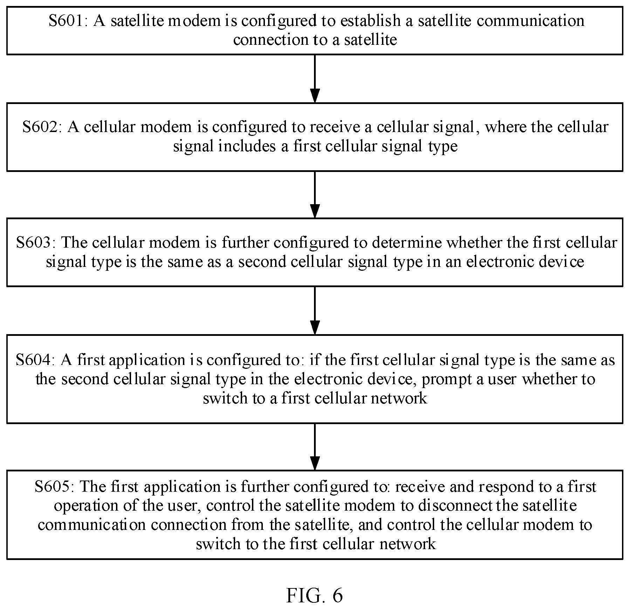

FIG. 6 is a schematic flowchart of a communication method based on a communication apparatus according to this application.

### DESCRIPTION OF EMBODIMENTS

The technical solutions according to embodiments of this application are described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in following embodiments of this application is a medium interface for interaction and information exchange between an application (application, app) or an operating system and a user, and implements conversion between an internal form of information and a form acceptable to the user. The user interface is source code written in a specific computer language, for example, Java or an extensible markup language (extensible markup language, XML). The interface source code is parsed and rendered on an electronic device, and is finally presented as content that can be identified by the user. A common representation form of the user interface is a graphical user interface (graphic user interface, GUI), which refers to a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

In recent years, with rapid development of satellite communication technologies, satellite communication services are increasingly popular. Currently, communication between electronic devices by using a satellite is supported, and a function like making a call to another party in an area without mobile network coverage can be implemented.

FIG. 1A-1 to FIG. 1A-3 are a diagram of a software structure of an electronic device 100.

The electronic device 100 may establish a communication connection to a satellite by using the software structure shown in FIG. 1A-1 to FIG. 1A-3, and make a call, send a message, or the like to another electronic device by using the satellite.

As shown in FIG. 1A-1 to FIG. 1A-3, the software architecture of the electronic device 100 may include an application layer, a framework layer, and a hardware abstract layer (hardware abstract layer, HAL).

The application layer may include one or more applications, for example, a call application 13, a contact application, and a messaging application 19. The application layer further includes modules, for example, a setting module and a system interface (systemUI) module. The call application 13 may also be referred to as a phone application, a dialing application, or the like. The messaging application 19 may also be referred to as a messaging application or the like. A specific name of the application is not limited in this application.

The framework layer may include a satellite communication mode module 11, a satellite searching service module 12, a call management module (telecom) 14, a call service module (telephony) 15, and a communication system framework (communication system framework, FWK-CS) 16.

The call management module (telecom) 14 may be configured to transmit data between the call service module (telephony) 15 and the application layer.

The call service module (telephony) 15 may include a call module and a connection module that correspond to one or more communication modes, for example, a satellite call (satellite call) module and a satellite connection (satellite connection) module that correspond to a satellite communication mode; a call (call) module and a call connection (telephony connection) module that correspond to a cellular communication mode; and a network call (VoIP call) module and a network connection (VoIP connection) module that correspond to a network communication mode. The call service module (telephony) 15 may determine a current communication mode, and bind a corresponding call service based on the current communication mode, that is, invoke a call module and a connection module that correspond to the current communication mode.

The satellite communication mode module 11 may set the satellite communication mode, and may further deliver an instruction to the satellite searching service module 12 after detecting that the satellite communication mode is enabled. The instruction indicates the satellite searching service module 12 to obtain satellite data, and the satellite data may include an azimuth and a pitch angle of the satellite relative to a device and a satellite signal strength. The satellite communication mode module 11 may further display a satellite searching guide based on the satellite data sent by the satellite searching service module 12, to guide the user to establish a communication connection between the electronic device 100 and the satellite.

After receiving the instruction delivered by the satellite communication mode module 11, the satellite searching service module 12 may obtain real-time satellite data, and send the satellite data to the satellite communication mode module 11. In some embodiments, the satellite searching service module 12 may determine the satellite data based on data collected by a global positioning service (global positioning service, GPS) module and a sensor module.

The communication system framework 16 may include a call framework, an SMS framework, and a radio interface layer (radio interface layer, RIL)-Java (also written as RILJ) that may also be referred to as an interface layer that supports a Java language.

The call framework may include a phone module and a voice call model module that correspond to the one or more communication modes, for example, a satellite phone (satellite phone) module and a satellite voice call model (satellite phone call tracker) that correspond to the satellite communication mode, and a phone module (GsmCdma phone) and a voice call model (GsmCdma phone call tracker) that correspond to the cellular communication mode.

The SMS framework may include an SMS management module (Smsmanager) 16a, and an SMS dispatcher that corresponds to the one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The HAL may include a radio interface layer (radio interface layer, RIL) 17. The RIL 17 may receive an instruction transmitted by the communication system framework, and deliver the instruction to a corresponding modem. The RIL 17 may include an RIL submodule corresponding to the one or more communication modes, for example, a satellite interface layer (satellite-RIL) corresponding to the satellite communication mode, and a vendor-RIL module corresponding to the cellular communication mode, where the satellite interface layer (satellite-RIL) and the vendor-RIL module are independent of each other. The satellite-RIL module may deliver an AT instruction to a satellite communication modem (modem) 18 at a hardware layer. The vendor-RIL module may deliver an AT instruction to a cellular modem at the hardware layer. In addition, the RIL 17 may further include modules, for example, a radio interface layer (RILC) that support a C language, a Lib-RIL, and a Common-RIL.

The software architecture of the electronic device 100 may interact with one or more pieces of hardware in the electronic device 100. The one or more pieces of hardware may include the satellite communication modem (modem) 18, the cellular modem, a Bluetooth (Bluetooth, BT) module, a high-fidelity (high-fidelity, Hi-Fi) module, the sensor module, and the global positioning service (global positioning service, GPS) module. The satellite communication modem (modem) 18 and the cellular modem are independent of each other. The Hi-Fi module may include a microphone (mic), a speaker (speaker), a codec (codec), and a power amplifier (power amplifier, PA).

When the electronic device 100 dials or answers a call by using the satellite communication modem (modem) 18, the satellite communication modem (modem) 18 may invoke the Hi-Fi module to implement a voice call function. In some embodiments, if the electronic device 100 is further connected to another electronic device like a Bluetooth headset by using the Bluetooth module in a call process, the satellite communication modem (modem) 18 may also invoke the Bluetooth module.

After the satellite communication mode is enabled, the electronic device 100 may determine a location of the electronic device 100 by using the GPS module, and start a satellite searching guide. For a specific satellite searching guide manner, refer to the following descriptions in embodiments.

It should be noted that the foregoing modules may also use other Chinese names, and the Chinese names of the modules are not limited in this application.

Based on the description in FIG. 1A-1 to FIG. 1A-3, it can be learned that the HAL layer includes the satellite-RIL and the vendor-RIL, and the satellite-RIL and the vendor-RIL are disposed independently of each other. The hardware layer includes the satellite modem and the cellular modem, and the satellite modem and the cellular modem are disposed independently of each other. The satellite-RIL is interconnected with the satellite modem, and the vendor-RIL is interconnected with the cellular modem.

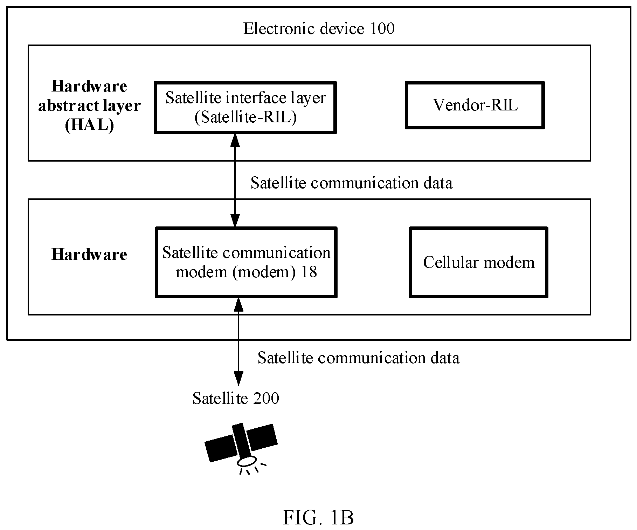

When the electronic device 100 is connected to the satellite 200, FIG. 1B is a diagram of mutual communication between the electronic device 100 and the satellite 200.

As shown in FIG. 1B, the satellite-RIL at the HAL layer is interconnected with the satellite modem at the hardware layer. The satellite modem at the hardware layer is connected to the satellite 200. When the electronic device 100 needs to communicate with the satellite 200, the application layer of the electronic device 100 may send satellite communication data to the satellite-RIL, and then the satellite-RIL sends the satellite communication data to the satellite modem. Finally, the satellite modem sends the satellite communication data to the satellite 200, and the satellite 200 sends the satellite communication data to another electronic device. Similarly, the satellite 200 may receive satellite communication data sent by the another electronic device, the satellite 200 then sends the satellite communication data to the satellite modem, and the satellite modem sends the satellite communication data to the satellite-RIL. Finally, the satellite-RIL sends the satellite communication data to the application layer of the electronic device 100.

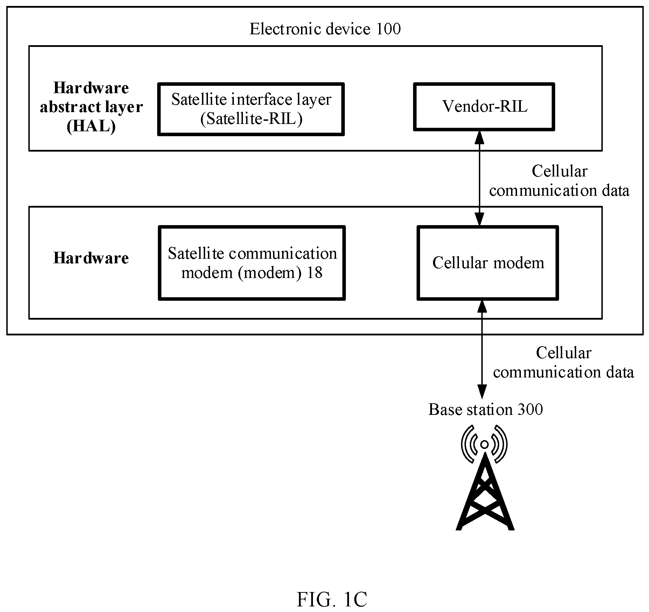

When the electronic device 100 is connected to a base station 300, FIG. 1C is another diagram of mutual communication between the electronic device 100 and the base station 300.

As shown in FIG. 1C, the vendor-RIL at the HAL layer is interconnected with the cellular modem at the hardware layer. The cellular modem at the hardware layer is connected to the base station 300. When the electronic device 100 needs to communicate with the base station 300, the application layer of the electronic device 100 may send cellular communication data to the vendor-RIL, and then the vendor-RIL sends the cellular communication data to the cellular modem. Finally, the cellular modem sends the cellular communication data to the base station 300, and the base station 300 sends the cellular communication data to another electronic device. Similarly, the base station 300 may receive the cellular communication data sent by the another electronic device, then the base station 300 sends the cellular communication data to the cellular modem, and the cellular modem sends the cellular communication data to the vendor-RIL. Finally, the vendor-RIL sends the cellular communication data to the application layer of the electronic device 100.

When the electronic device 100 is connected to the satellite 200, it can be learned from FIG. 1B and FIG. 1C that the vendor-RIL and the satellite-RIL at the HAL layer are disposed independently of each other, and the satellite modem and the cellular modem at the hardware layer are disposed independently of each other. The cellular modem at the hardware layer cannot learn of a status of the satellite modem, the cellular modem cannot learn whether the satellite modem is connected to the satellite 200, and the cellular modem cannot learn when to detect a cellular signal and when to prompt the user whether to switch a cellular network. Currently, only when detecting that the user manually disconnects a satellite call connection, the electronic device 100 can trigger the cellular modem to detect the cellular signal and prompt the user whether to switch the cellular network. Consequently, user operations are complex.

The following describes a satellite communication system 10 related to the satellite communication method provided in embodiments of this application.

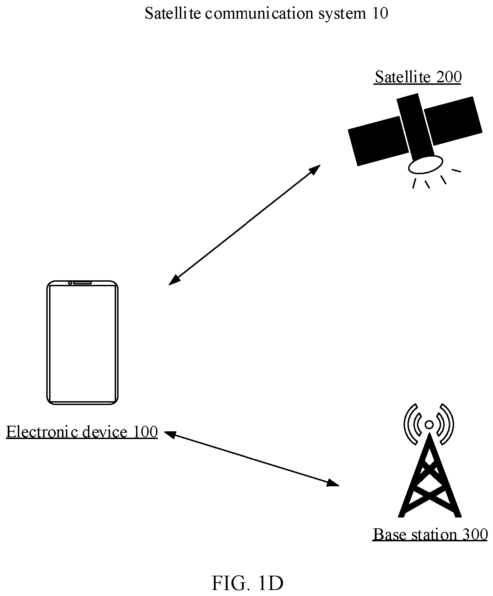

As shown in FIG. 1D, the satellite communication system 10 may include an electronic device 100, a satellite 200, and a base station 300.

In the satellite communication system 10, the electronic device 100 may establish a satellite communication connection to the satellite 200. In this way, when the electronic device 100 is located in an area without cellular network coverage, the electronic device 100 may send a message to another electronic device by using the satellite 200, so that the electronic device 100 communicates with the another device.

In some embodiments, the electronic device 100 may periodically/aperiodically obtain a signal type of a cellular signal received by an antenna on the electronic device 100, to determine whether the electronic device 100 is in coverage of a cellular network.

The electronic device 100 may also obtain a cellular signal type corresponding to a SIM card inserted into the electronic device 100. When the signal type of the cellular signal received by the antenna on the electronic device 100 is the same as the cellular signal type corresponding to the SIM card inserted into the electronic device 100, the electronic device 100 may prompt the user whether to switch to the cellular network. When the user determines to switch to the cellular network, the electronic device 100 may disconnect the satellite communication connection from the satellite 200, and establish a connection to the base station 300, so that the electronic device 100 may establish a cellular network connection to the base station 300, and send a message to another electronic device via the base station 300. When the user determines not to switch to the cellular network, the electronic device 100 may continue to maintain the satellite communication connection to the satellite 200.

Optionally, the electronic device 100 may alternatively detect a signal strength of the cellular signal received by the antenna on the electronic device 100. When the signal type of the cellular signal received by the antenna on the electronic device 100 is the same as the cellular signal type corresponding to the SIM card inserted into the electronic device 100, and the signal strength of the cellular signal received by the antenna on the electronic device 100 is greater than a first threshold, the electronic device 100 prompts the user whether to switch to the cellular network. In this way, it can be ensured that the electronic device 100 switches to the cellular network when the cellular signal is good.

Optionally, to avoid a case in which data transmission fails because the electronic device 100 switches to the cellular network when the electronic device 100 and the satellite 200 transmit data, the electronic device 100 may prompt, when the electronic device 100 is in an idle state, the user whether to switch to the cellular network.

Optionally, the electronic device 100 may alternatively detect, when the electronic device 100 is in a busy state, the signal type and the strength that are of the cellular signal received by the antenna on the electronic device 100, or the electronic device 100 may alternatively detect, when the electronic device 100 is in the idle state, the signal type and the strength that are of the cellular signal received by the antenna on the electronic device 100. This is not limited in this application.

That the electronic device 100 is in the idle state may mean that there is no to-be-transmitted data between the electronic device 100 and the satellite 200. For example, the electronic device 100 has no data to be sent to the satellite 200, and the electronic device 100 has no data to be received from the satellite 200.

That the electronic device 100 is in the busy state may mean that there is to-be-transmitted data between the electronic device 100 and the satellite 200. For example, the electronic device 100 has data to be sent to the satellite 200, or the electronic device 100 is sending data to the satellite 200, or the electronic device 100 has data to be received from the satellite 200, or the electronic device 100 is receiving data sent by the satellite 200.

For example, that the electronic device 100 is in the busy state may mean that the electronic device 100 establishes a satellite call with an electronic device 400 (not shown in the figure) by using the satellite 200, or may mean that the electronic device 100 is sending an SMS message to the another device by using the satellite 200, or may mean that the electronic device 100 is receiving an SMS message sent by the another device by using the satellite 200.

For example, that the electronic device 100 is in the idle state may mean that the electronic device 100 does not establish a satellite call with the satellite 200, or may mean that the electronic device 100 does not send an SMS message to the another device by using the satellite 200, or may mean that the electronic device 100 does not receive an SMS message sent by the another device by using the satellite 200.

According to the method, after establishing the satellite communication connection to the satellite 200, the electronic device 100 may automatically detect the signal type of the cellular signal received by the antenna on the electronic device 100, and prompt, after detecting the corresponding cellular signal, the user to switch to the cellular network. The user does not need to manually disable the satellite communication connection and then switch to the cellular network, thereby reducing user operations and improving user experience.

It should be understood that the satellite communication system 10 shown in FIG. 1D is merely a diagram of a system structure of a communication system provided in embodiments of this application, and does not constitute a specific limitation on the satellite communication system 10. The satellite communication system 10 may include more or fewer devices than those shown in the figure. For example, the satellite communication system 10 may further include a wireless relay device and a wireless backhaul device (not shown in FIG. 1D). This is not limited herein.

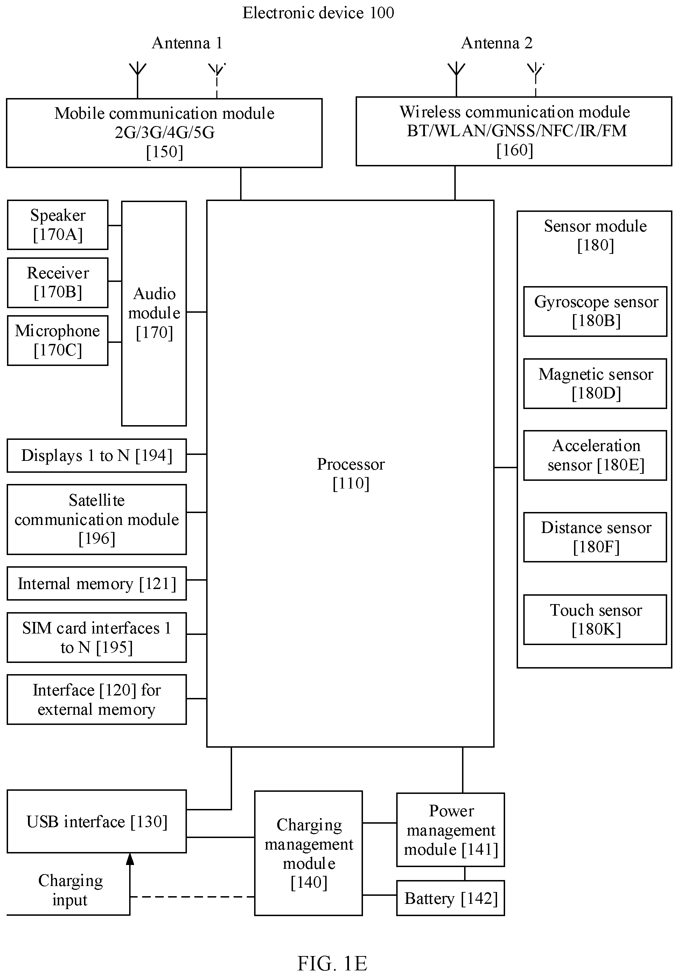

FIG. 1E is a diagram of a hardware structure of an electronic device 100 according to this application.

A hardware structure of the electronic device 400 is similar to a hardware structure of the electronic device 100. For details, refer to descriptions in an embodiment in FIG. 1E.

The electronic device 100 may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a smart band), a vehicle-mounted device, a smart home device (for example, a smart television, a smart screen, or a large-screen device), a smart city device, and/or the like. A specific type of the terminal device 100 is not specially limited in embodiments of this application. The terminal device may also be referred to as an electronic device, a terminal, or the like.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a display 194, a subscriber identification module (subscriber identification module, SIM) card interface 195, a satellite communication module 196, and the like. The sensor module 180 may include one or more sensors, for example, a gyroscope sensor 180B, a magnetic sensor 180D, an acceleration sensor 180E, a distance sensor 180F, a touch sensor 180K, and the like. In some embodiments, the sensor module 180 may further include one or more of sensors such as a pressure sensor, a barometric pressure sensor, an optical proximity sensor, a fingerprint sensor, a temperature sensor, an ambient optical sensor, and a bone conduction sensor.

It can be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency. In some embodiments, the processor 110 may include one or more interfaces, for example, a universal serial bus (universal serial bus, USB) interface.

The USB interface 130 is an interface that conforms to a USB standard specification, and may be specifically a mini USB interface, a micro USB interface, a USB type-C interface, or the like. The USB interface 130 may be configured to connect to a charger for charging the electronic device 100, may be configured to transmit data between the electronic device 100 and a peripheral device, or may be configured to connect to a headset for playing audio through the headset. The interface may be further configured to connect to another electronic device, for example, an AR device.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 when charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the electronic device 100, to wireless communication including 2G, 3G, 4G, 5G, or the like. The mobile communication module 150 may include at least one filter, a switch, a power amplifier, a low noise amplifier (low noise amplifier, LNA), or the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, or the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memories, RAMs) and one or more non-volatile memories (non-volatile memories, NVMs).

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable program, the data of the user, the data of the application, and the like, which may be loaded into the random access memory in advance for directly reading and writing by the processor 110.

The interface 120 for external memory may be configured to connect to an external non-volatile memory, to extend a storage capability of the electronic device 100. The external non-volatile memory communicates with the processor 110 through the interface 120 for external memory, to implement a data storage function. For example, a file like music or a video is stored in the external nonvolatile memory.

The electronic device 100 may implement an audio function, for example, music playing or recording, by using the audio module 170, the speaker 170A, the receiver 170B, the microphone 170C, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or listens to voice information, the receiver 170B may be placed near a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function in addition to a function of collecting a sound signal. In some other embodiments, three, four, or more microphones 170C may be alternatively disposed in the electronic device 100, to collect a sound signal, implement noise reduction, and identify a sound source, to implement a directional recording function and the like.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The magnetic sensor 180D includes a Hall sensor. The electronic device 100 may detect opening and closing of a leather case by using the magnetic sensor 180D.

The acceleration sensor 180E may detect a magnitude of an acceleration of the electronic device 100 in each direction (usually, on three axes). When the electronic device 100 is still, the acceleration sensor may detect magnitude and a direction of gravity. The acceleration sensor may be further configured to identify a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance by using the range sensor 180F, to implement quick focusing.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the electronic device 100 at a location different from that of the display 194.

In some embodiments, the electronic device 100 may further include one or more of a button, a motor, and an indicator. The button may include a power button, a volume button, and the like. The button may be a mechanical button, or a touch button. The electronic device 100 may receive a button input, and generate a key signal input related to a user setting and function control of the electronic device 100. The motor may generate a vibration prompt. The indicator may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into the same SIM card interface 195. The plurality of cards may be of a same type or different types. The SIM card interface 195 may be compatible with different types of SIM cards. The SIM card interface 195 is also compatible with an external storage card. The electronic device 100 interacts with a network by using the SIM card, to implement a call function, a data communication function, and the like. In some embodiments, the electronic device 100 uses an eSIM, namely, an embedded SIM card. The eSIM card may be embedded into the electronic device 100, and cannot be separated from the electronic device 100.

The satellite communication module 196 may provide a satellite communication solution applied to the electronic device 100. The satellite communication module 196 may be one or more components integrating at least one communication processing module, for example, a satellite communication modem (modem) and an antenna. The satellite communication module 196 may modulate a signal by using the satellite communication modem, and radiate the modulated signal through the antenna. In some embodiments, the satellite communication module 196 may also receive, through the antenna, a signal sent by a satellite, demodulate the received signal by using the satellite communication modem, and send the processed signal to the processor 110.

It should be noted that, for a hardware structure of the electronic device 400 (not shown in the figure), reference may be made to the hardware structure of the electronic device 100. Details are not described herein in this application.

FIG. 1F-1 to FIG. 1F-3 are a diagram of a software architecture of an electronic device 100 according to an embodiment of this application.

As shown in FIG. 1F-1 to FIG. 1F-3, the software architecture of the electronic device 100 may include an application layer, a framework layer, and a hardware abstract layer (hardware abstract layer, HAL).

The application layer may include one or more applications, for example, a call application 13, a contact application, and a messaging application 19. The application layer further includes modules, for example, a setting module and a system interface (systemUI) module. The call application 13 may also be referred to as a phone application, a dialing application, or the like. The messaging application 19 may also be referred to as a messaging application or the like. A specific name of the application is not limited in this application.

The framework layer may include a satellite communication mode module 11, a satellite searching service module 12, a call management module (telecom) 14, a call service module (telephony) 15, and a communication system framework (communication system framework, FWK-CS) 16.

The call management module (telecom) 14 may be configured to transmit data between the call service module (telephony) 15 and the application layer.

The call service module (telephony) 15 may include a call module and a connection module that correspond to one or more communication modes, for example, a satellite call (satellite call) module and a satellite connection (satellite connection) module that correspond to a satellite communication mode; a call (call) module and a call connection (telephony connection) module that correspond to a cellular communication mode; and a network call (VoIP call) module and a network connection (VoIP connection) module that correspond to a network communication mode. The call service module (telephony) 15 may determine a current communication mode, and bind a corresponding call service based on the current communication mode, that is, invoke a call module and a connection module that correspond to the current communication mode.

The satellite communication mode module 11 may set the satellite communication mode, and may further deliver an instruction to the satellite searching service module 12 after detecting that the satellite communication mode is enabled. The instruction indicates the satellite searching service module 12 to obtain satellite data, and the satellite data may include an azimuth and a pitch angle of the satellite relative to a device and a satellite signal strength. The satellite communication mode module 11 may further display a satellite searching guide based on the satellite data sent by the satellite searching service module 12, to guide the user to establish a communication connection between the electronic device 100 and the satellite.

After receiving the instruction delivered by the satellite communication mode module 11, the satellite searching service module 12 may obtain real-time satellite data, and send the satellite data to the satellite communication mode module 11. In some embodiments, the satellite searching service module 12 may determine the satellite data based on data collected by a global positioning service (global positioning service, GPS) module and a sensor module. For example, the satellite data includes but is not limited to data like an azimuth of the electronic device 100 relative to the satellite and a pitch angle of the electronic device 100 relative to the satellite. Optionally, the azimuth of the electronic device 100 relative to the satellite may be obtained by using a compass in the electronic device 100. The pitch angle of the electronic device 100 relative to the satellite may be obtained by using a sensor like a gyroscope in the electronic device 100.

The communication system framework 16 may include a call framework, an SMS framework, and a radio interface layer (radio interface layer, RIL)-Java (also written as RILJ) that may also be referred to as an interface layer that supports a Java language.

The call framework may include a phone module and a voice call model module that correspond to one or more communication modes, for example, a satellite phone (satellite phone) module and a satellite voice call model (satellite phone call tracker) that correspond to the satellite communication mode, and a phone module (GsmCdma phone) and a voice call model (GsmCdma phone call tracker) that correspond to the cellular communication mode.

The SMS framework may include an SMS management module (Smsmanager) 16a, and an SMS dispatcher that corresponds to the one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The HAL may include a radio interface layer (radio interface layer, RIL) 17. The RIL 17 may receive an instruction transmitted by the communication system framework, and deliver the instruction to a corresponding modem. The RIL 17 may include an RIL submodule corresponding to one or more communication modes, for example, a satellite interface layer (satellite-RIL) corresponding to the satellite communication mode and a vendor-RIL module corresponding to the cellular communication mode, where the satellite interface layer (satellite-RIL) is integrated into the vendor-RIL module. The satellite-RIL module may deliver an AT instruction to a satellite communication modem (modem) 18 at a hardware layer. The vendor-RIL module may deliver an AT instruction to a cellular modem at the hardware layer. In addition, the RIL 17 may further include modules, for example, a radio interface layer (RILC) that support a C language, a Lib-RIL, and a Common-RIL.

The software architecture of the electronic device 100 may interact with one or more pieces of hardware in the electronic device 100. The one or more pieces of hardware may include the satellite communication modem (modem) 18, the cellular modem, a Bluetooth (Bluetooth, BT) module, a high-fidelity (high-fidelity, Hi-Fi) module, a sensor module, and a global positioning service (global positioning service, GPS) module. The satellite communication modem (modem) 18 may be integrated into the cellular modem. The Hi-Fi module may include a microphone (mic), a speaker (speaker), a codec (codec), and a power amplifier (power amplifier, PA).

When the electronic device 100 dials or answers a call by using the satellite communication modem (modem) 18, the satellite communication modem (modem) 18 may invoke the Hi-Fi module to implement a voice call function. In some embodiments, if the electronic device 100 is further connected to another electronic device like a Bluetooth headset by using the Bluetooth module in a call process, the satellite communication modem (modem) 18 may also invoke the Bluetooth module.

After the satellite communication mode is enabled, the electronic device 100 may determine a location of the electronic device 100 by using the GPS module, and start a satellite searching guide. For a specific satellite searching guide manner, refer to the following descriptions in embodiments.

It should be noted that the foregoing modules may also use other Chinese names, and the Chinese names of the modules are not limited in this application.

When the electronic device 100 is connected to the satellite 200, FIG. 1G is another diagram of mutual communication between the electronic device 100 and the satellite 200.

As shown in FIG. 1G, the satellite-RIL at the HAL layer is disposed inside the vendor-RIL, and the satellite modem at the hardware layer is disposed inside the cellular modem. The vendor-RIL may interact with an upper-layer function module or an upper-layer application, and the satellite modem and the cellular modem may communicate with each other. For example, when a communication status between the electronic device 100 and the satellite is an idle state, the satellite modem may send a first instruction to the cellular modem, where the first instruction indicates the cellular modem to receive a cellular signal and detect a cellular signal type and/or a cellular signal strength, to determine whether to switch to a cellular network. When it is determined that the satellite communication connection is disconnected, the cellular modem may also send a second instruction to the satellite modem, where the second instruction indicates the satellite modem to disconnect from the satellite. The vendor-RIL at the HAL layer is interconnected with the cellular modem at the hardware layer. When the satellite-RIL is enabled, the vendor-RIL is also in a power-on state. When the satellite modem is enabled, the cellular modem is also in the power-on state.

When the electronic device 100 needs to communicate with the satellite 200, the application layer of the electronic device 100 may send satellite communication data to the satellite-RIL in the vendor-RIL, and the satellite-RIL in the vendor-RIL sends the satellite communication data to the satellite modem in the cellular modem. Finally, the satellite modem in the cellular modem sends the satellite communication data to the satellite 200, and the satellite 200 sends the satellite communication data to another electronic device. Similarly, the satellite 200 may receive satellite communication data sent by the another electronic device, the satellite 200 then sends the satellite communication data to the satellite modem in the cellular modem, and the satellite modem in the cellular modem then sends the satellite communication data to the satellite-RIL in the vendor-RIL. Finally, the satellite-RIL in the vendor-RIL sends the satellite communication data to the application layer of the electronic device 100. Optionally, the vendor-RIL may receive the satellite communication data sent by the application layer, and then send the satellite communication data to the satellite modem in the cellular modem by using the vendor-RIL.

When the electronic device 100 is connected to the base station 300, FIG. 1H is still another diagram of mutual communication between the electronic device 100 and the base station 300.

As shown in FIG. 1H, the satellite-RIL at the HAL layer is disposed inside the vendor-RIL, the satellite modem at the hardware layer is disposed inside the cellular modem, the vendor-RIL at the HAL layer is interconnected with the cellular modem at the hardware layer, the vendor-RIL may interact with an upper-layer function module or an upper-layer application, and the satellite modem and the cellular modem may communicate with each other. When the vendor-RIL is enabled, the satellite-RIL may be in a power-on state or a power-off state. When the cellular modem is enabled, the satellite modem may be in a power-on state or a power-off state. When the electronic device 100 needs to communicate with the base station 300, the application layer of the electronic device 100 may send cellular communication data to the vendor-RIL, and then the vendor-RIL sends the cellular communication data to the cellular modem. Finally, the cellular modem sends the cellular communication data to the base station 300, and the base station 300 sends the cellular communication data to the another electronic device. Similarly, the base station 300 may receive the cellular communication data sent by the another electronic device, then the base station 300 sends the cellular communication data to the cellular modem, and the cellular modem sends the cellular communication data to the vendor-RIL. Finally, the vendor-RIL sends the cellular communication data to the application layer of the electronic device 100.

FIG. 1I-1 to FIG. 1I-4 are a diagram of another software architecture of an electronic device 100 according to an embodiment of this application.

As shown in FIG. 1I-1 to FIG. 1I-4, the software architecture of the electronic device 100 may include an application layer, a framework layer, and a hardware abstract layer (hardware abstract layer, HAL).

The application layer may include one or more applications, for example, a call application 13, a contact application, a messaging application 19, a MeeTime application, and a satellite setting application. The call application 13 may also be referred to as a phone application, a dialing application, or the like. The messaging application 19 may also be referred to as a messaging application or the like. A specific name of the application is not limited in this application.

In some embodiments, a user may enable a satellite communication mode by using the satellite setting application, and deliver an instruction to a satellite communication service. The instruction indicates the satellite communication service to obtain satellite data, receive the satellite data sent by the satellite communication service, and display a satellite searching guide interface. In some embodiments, the user may also enable the satellite communication mode in the MeeTime application. The MeeTime application may invoke the satellite setting application, and deliver an instruction to the satellite communication service by using the satellite setting application. The instruction indicates the satellite communication service to obtain satellite data, and receive the satellite data sent by the satellite communication service. After receiving the satellite data sent by the satellite setting application, the MeeTime application may display the satellite searching guide interface.

The framework layer may include a call management module (telecom) 14, a call service module (telephony) 15, a communication system framework (communication system framework, FWK-CS) 16, and a satellite service (Satellite-system).

The call management module (telecom) 14 may be configured to transmit data between the call service module (telephony) 15 and the application layer.

The call service module (telephony) 15 may include a call module and a connection module that correspond to one or more communication modes, for example, a satellite call (satellite call) module and a satellite connection (satellite connection) module that correspond to a satellite communication mode; a call (call) module and a call connection (telephony connection) module that correspond to a cellular communication mode; and a network call (VoIP call) module and a network connection (VoIP connection) module that correspond to a network communication mode. The call service module (telephony) 15 may determine a current communication mode, and bind a corresponding call service based on the current communication mode, that is, invoke a call module and a connection module that correspond to the current communication mode.

The communication system framework 16 may include a call framework, an SMS framework, and a radio interface layer (radio interface layer, RIL)-Java (also written as RILJ) that may also be referred to as an interface layer that supports a Java language.

The call framework may include a phone module and a voice call model module that correspond to one or more communication modes, for example, a satellite phone (satellite phone) module and a satellite voice call model (satellite phone call tracker) that correspond to the satellite communication mode, and a phone module (GsmCdma phone) and a voice call model (GsmCdma phone call tracker) that correspond to the cellular communication mode.

The SMS framework may include an SMS management module (Smsmanager) 16a, and an SMS dispatcher that corresponds to the one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The satellite service includes a satellite communication service (Satellite Service) and a satellite searching service (SatelliteSearchService). The satellite service may set the satellite communication mode, and may further deliver an instruction to the satellite searching service after detecting that the satellite communication mode is enabled. The instruction indicates the satellite searching service to obtain satellite data, and the satellite data may include an azimuth and a pitch angle of a satellite relative to the device, and a satellite signal strength. The satellite service may further display a satellite searching guide based on the satellite data sent by the satellite searching service, to guide the user to establish a communication connection between the electronic device 100 and the satellite.

The satellite communication service may include a satellite call management (SatelliteCallService) module, a satellite information management (SatelliteSmsService) module, a satellite service status management (SatelliteSmsService) module, and a satellite signal management (SatelliteSmsService) module. The satellite searching service may include a satellite azimuth obtaining module, a satellite pitch angle obtaining module, a satellite signal obtaining module, and a mutually exclusive service processing module.

The satellite call management module is configured to receive satellite call data sent by the satellite voice call model, and send the satellite call data to a satellite interface layer.

The satellite information management module is configured to receive a satellite SMS message sent by the satellite SMS scheduler, and send the satellite SMS message to the satellite interface layer.

The satellite service status management module is configured to obtain a satellite connection status, and send the satellite connection status to the communication system framework 16, and the communication system framework 16 reports the satellite connection status to the application layer, so that the application layer can obtain the satellite connection status. Optionally, the satellite service status management module may obtain a connection status between the electronic device 100 and a Tiantong satellite from a satellite modem, or obtain a connection status between the electronic device 100 and a BeiDou satellite from a BeiDou modem.

The satellite signal management module is configured to obtain a satellite signal strength, and send the satellite signal strength to the communication system framework 16, and the communication system framework 16 reports the satellite signal strength to the application layer, so that the application layer can obtain the satellite signal strength. Optionally, the satellite signal management module may obtain the satellite signal strength from the satellite signal obtaining module in the satellite searching service.

The satellite azimuth obtaining module is configured to obtain an azimuth of the electronic device 100 relative to the satellite from a sensor module in hardware. Optionally, the azimuth of the electronic device 100 relative to the satellite may be obtained by using a compass in the electronic device 100.

The satellite pitch angle obtaining module is configured to obtain a pitch angle of the electronic device 100 relative to the satellite from a sensor module in the hardware. Optionally, the pitch angle of the electronic device 100 relative to the satellite may be obtained by using a sensor like a gyroscope in the electronic device 100.

The satellite signal obtaining module is configured to obtain the satellite signal strength obtained by the electronic device 100, and send the satellite signal strength to the satellite signal management module in the satellite communication service. Optionally, the satellite signal obtaining module may be obtained by the electronic device 100 through an antenna or another module.

The mutually exclusive service processing module is configured to: after the electronic device 100 establishes the communication connection to the satellite, disable some services of the electronic device 100, for example, disable a WLAN function of the electronic device 100, and disable a global positioning service (GPS) function.

The HAL may include a radio interface layer (radio interface layer, RIL). The RIL 17 may receive an instruction transmitted by the communication system framework, and deliver the instruction to a corresponding modem. The RIL 17 may include an RIL submodule corresponding to one or more communication modes, for example, a satellite interface layer (satellite-RIL) corresponding to a Tiantong satellite communication mode, a cellular interface layer (vendor-RIL) corresponding to the cellular communication mode, and a BeiDou satellite interface layer (BeiDou-RIL) corresponding to a BeiDou satellite communication mode.

The software architecture of the electronic device 100 may interact with one or more pieces of hardware in the electronic device 100. The one or more pieces of hardware may include a satellite communication modem (modem), a cellular modem, a BeiDou modem, a Bluetooth (Bluetooth, BT) module, a high-fidelity (high-fidelity, Hi-Fi) module, a sensor module, and a global positioning service (global positioning service, GPS) module. The cellular modem includes a satellite modem and a BeiDou modem. When the cellular modem is in a power-on state, the satellite modem may be in the power-on state or a power-off state, and the BeiDou modem may be in the power-on state or the power-off state. When the satellite modem is in the power-on state, the cellular modem is also in the power-on state. When the BeiDou modem is in the power-on state, the cellular modem is also in the power-on state. The Hi-Fi module may include a microphone (mic), a speaker (speaker), a codec (codec), and a power amplifier (power amplifier, PA).

When the electronic device 100 dials or answers a call by using the satellite modem, the satellite modem may invoke the Hi-Fi module to implement a voice call function. In some embodiments, if the electronic device 100 is further connected to another electronic device like a Bluetooth headset by using the Bluetooth module in a call process, the satellite modem may also invoke the Bluetooth module.

After the satellite communication mode is enabled, the electronic device 100 may determine a location of the electronic device 100 by using the GPS module. Then, the electronic device 100 may start to perform satellite searching guide. For a specific satellite searching guide manner, refer to the following descriptions in embodiments.

It should be noted that the foregoing modules may also use other Chinese names, and the Chinese names of the modules are not limited in this application.

The electronic device 100 may not only communicate with the electronic device 400 by using a satellite device through the software structure shown in FIG. 1F-1 to FIG. 1F-3, but also communicate with the electronic device 400 by using the satellite device through the software structure shown in FIG. 1I-1 to FIG. 1I-4. In this application, only an example in which the electronic device 100 communicates with the electronic device 400 by using the satellite device through the software structure shown in FIG. 1F-1 to FIG. 1F-3 is used for description, and does not constitute a limitation.

The following describes in detail a satellite communication method provided in this application with reference to a plurality of phases such as establishing a satellite communication connection between the electronic device 100 and the satellite device and prompting, by the electronic device 100, a user whether to switch to a cellular network.

First, how the electronic device 100 establishes a satellite communication connection to the electronic device 400 based on the satellite device is described.

FIG. 2A to FIG. 2I are UI diagrams in which an electronic device 100 establishes a satellite communication connection to an electronic device 400 based on a satellite device.

For example, as shown in FIG. 2A, the electronic device 100 displays a desktop. A page on which application icons are placed is displayed on the desktop. The page includes a plurality of application icons (for example, a weather application icon, a setting application icon 206, a browser application icon, a chat application icon, a social application icon, a document application icon, and the like). A page indicator 202 is further displayed below the page on which the application icons are placed, to indicate a total quantity of pages on the desktop and a location relationship between the currently displayed page and other pages. For example, the desktop may include three pages. A white dot in the page indicator is located at a third location from left, indicating that the currently displayed page is the third page from left in the three pages. Optionally, a status bar 201 is further displayed on an upper part of the page on which the application icons are placed. The status bar 201 may include information, for example, a strength indicator of a communication signal, a battery level value, and time. It should be noted that the strength indicator of the communication signal may indicate a signal strength of a cellular network signal received by the electronic device 100. It can be learned from FIG. 2A that the electronic device 100 currently cannot receive the cellular network signal. Further optionally, there may be a dock (dock) area 203 below the page indicator. The dock area 203 may include one or more dock icons (for example, a phone application icon 204, a messaging application icon 205, a contact application icon, and a camera application icon). One or more dock icons in the dock area can remain displayed during page switching.

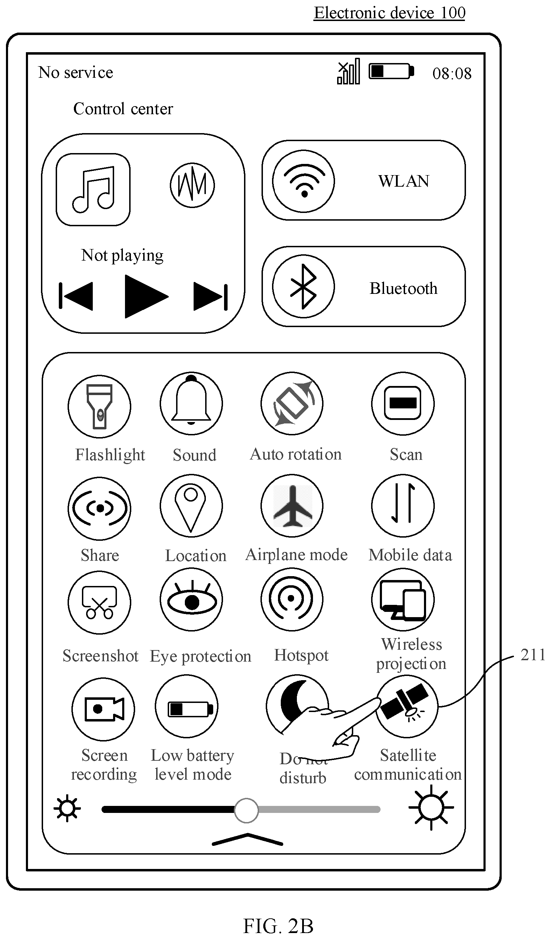

The electronic device 100 may receive and respond to a downward sliding operation performed by the user on the desktop, and display a control center interface shown in FIG. 2B.

As shown in FIG. 2B, the control center interface may include one or more function switch controls, for example, a satellite communication control 211, a flashlight control, a sharing control, and an airplane mode control. Each function switch control may be used to enable or disable a corresponding function.

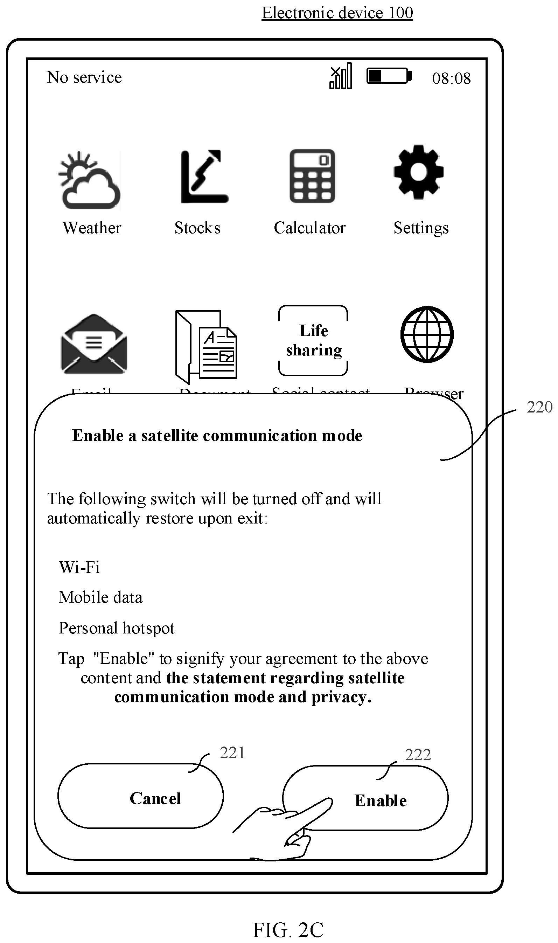

The electronic device 100 may receive and respond to a tap operation performed by the user on the satellite communication control 211, and display an enabling prompt window 220 on the desktop, as shown in FIG. 2C.

Optionally, in addition to enabling a satellite communication mode in the control center interface, the user may alternatively enable the satellite communication mode in a setting application.

As shown in FIG. 2C, an enabling prompt may be displayed in the enabling prompt window 220, and the enabling prompt is used to notify the user of precautions for enabling the satellite communication mode. For example, after the satellite communication mode is enabled, functions such as Wi-Fi, mobile data, and a personal hotspot are disabled. The enabling prompt window 220 may further include a cancel control 221 and an enable control 222. The cancel control 221 may be configured to trigger the electronic device 100 to disable displaying of the enabling prompt window 220, and the enable control 222 may be configured to trigger the electronic device 100 to enable the satellite communication mode.

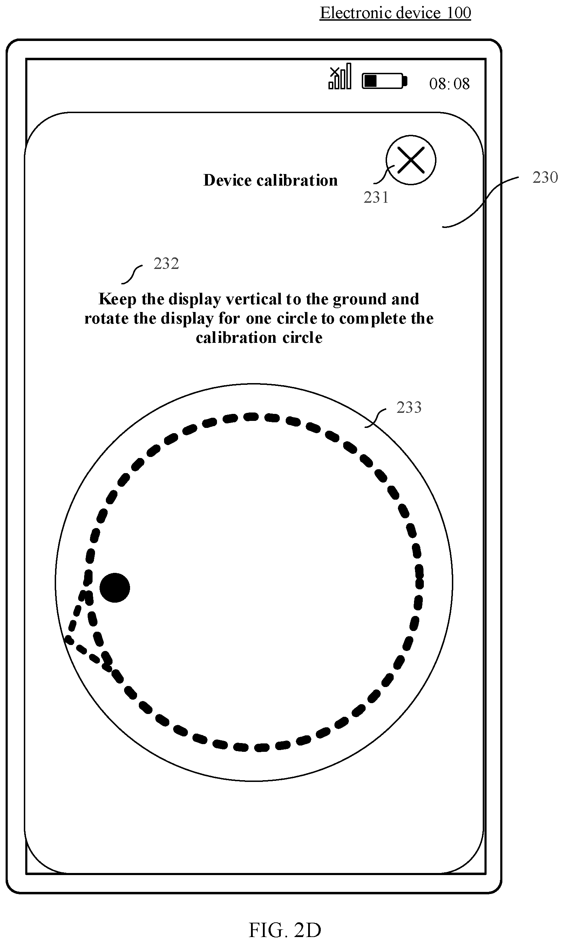

The electronic device 100 may receive and respond to a tap operation performed by the user on the enable control 222, and disable displaying of the enabling prompt window 220. Optionally, the electronic device 100 may display a calibration page 230 shown in FIG. 2D on the desktop.

As shown in FIG. 2D, the calibration page 230 may include a disable control 231, an operation prompt 232, and a calibration auxiliary graph 233. The disable control 231 may be configured to trigger the electronic device 100 to disable the satellite communication mode. The operation prompt 232 may be used to prompt the user to perform calibration. The operation prompt may be a text prompt, for example, "Keep the display vertical to the ground and rotate the display for one circle to complete the calibration circle". The calibration auxiliary graph 233 may be used to assist the user in completing calibration. For example, the calibration auxiliary graph 233 may be a small ball and a circle shown in FIG. 2D. In a process in which the user rotates the electronic device 100, the small ball may move around an inner side of the circle. After the small ball moves around the inner side of the circle for one circle, the electronic device 100 completes the calibration.

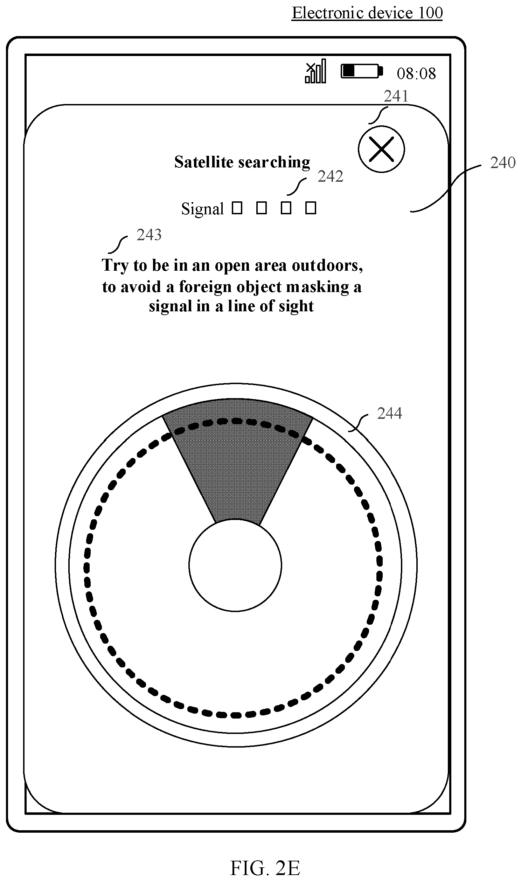

After the calibration is completed, the electronic device 100 may disable displaying of the calibration page 230, and display a satellite searching page 240 shown in FIG. 2E on the desktop. In some embodiments, if the electronic device 100 determines that the calibration is not required, the electronic device 100 may also close the enabling prompt window 220 in response to the tap operation performed by the user on the enable control 222, and display the satellite searching page 240 shown in FIG. 2E on the desktop.

As shown in FIG. 2E, the satellite searching page 240 may include a disable control 241, a strength indicator 242, and a satellite searching operation prompt (including a text prompt 243 and an animation prompt 244). The disable control 241 may be configured to trigger the electronic device 100 to disable the satellite communication mode. The strength indicator 242 indicates a satellite signal strength. The satellite searching operation prompt indicates the user to perform a satellite searching operation. For example, the text prompt 243 may include text "Try to be in an open area outdoors, to avoid a foreign object masking a signal in a line of sight". The animation prompt 244 may be used to prompt whether the electronic device 100 detects a satellite. The animation prompt 244 may include a sector area, and the sector area may be used to prompt the user with a location relationship between a location of the satellite and a location to which an antenna on the electronic device 100 points. In the embodiment shown in FIG. 2E, no symbol indicating the satellite appears in the animation prompt 244, to prompt the user that the electronic device 100 has not currently searched for the satellite.

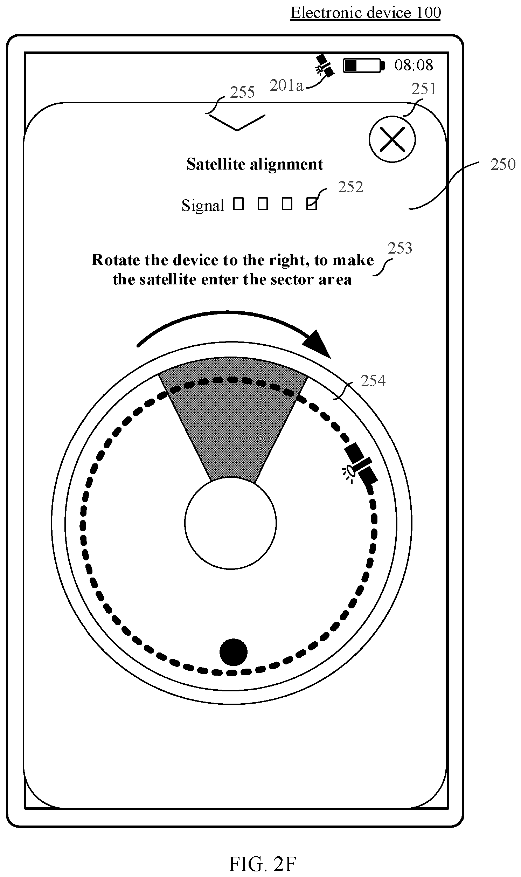

After the electronic device 100 finds the satellite, the electronic device 100 may close the satellite searching page 240, and display, based on a location of the satellite relative to the electronic device 100, an alignment page 250 shown in FIG. 2F. The location of the satellite relative to the electronic device 100 may be represented by a pitch angle and an azimuth.

As shown in FIG. 2F, the alignment page 250 may include a disable control 251, a strength indicator 252, a widget display control 255, and an alignment operation prompt (including a text prompt 253 and an animation prompt 254). For specific functions of the disable control 251 and the strength indicator 252, refer to functions of corresponding controls on the satellite searching page 240 shown in FIG. 2E. The widget display control 255 may be configured to trigger the electronic device 100 to disable displaying of the alignment page, and display a satellite live widget, where the satellite live widget includes a part or an entirety of content in the current alignment page 250. The alignment operation prompt indicates the user to perform an alignment operation. For example, the text prompt 253 may include text "Rotate the device to the right, to make the satellite enter the sector area". The animation prompt 254 may include the sector area, and the sector area may be used to prompt the user with an azimuth between the location of the satellite and the antenna on the electronic device 100. In the animation prompt 254 shown in FIG. 2F, a symbol representing the satellite (referred to as the satellite in the following embodiments) is located on a right side of the sector area. Therefore, the user needs to rotate the electronic device 100 to the right, so that the satellite is located in the sector area, to ensure that the electronic device 100 establishes a good communication connection to the satellite through the antenna. In addition, the animation prompt 254 may further include a small ball, and a location of the small ball may be used to prompt the user with a pitch angle of the electronic device 100 relative to the satellite. The animation prompt 254 may further include an arrow. The arrow indicates that the user rotates the device to the right. In addition, a satellite symbol 201a may be further displayed on the desktop, to prompt the user that the electronic device 100 has currently searched for the satellite. In some other embodiments, the satellite symbol 201a may alternatively be displayed after the electronic device 100 establishes a communication connection to the satellite, or displayed after the satellite communication mode is enabled.

It may be understood that the alignment page 250 shown in FIG. 2F is merely an example. In some embodiments, if the satellite is in another orientation relative to the antenna on the electronic device 100, the alignment operation prompt in the alignment page 250 may also be correspondingly changed (for example, when the satellite is located on a left side of the sector area, the user is prompted to rotate the device to the left). This is not limited in this application.

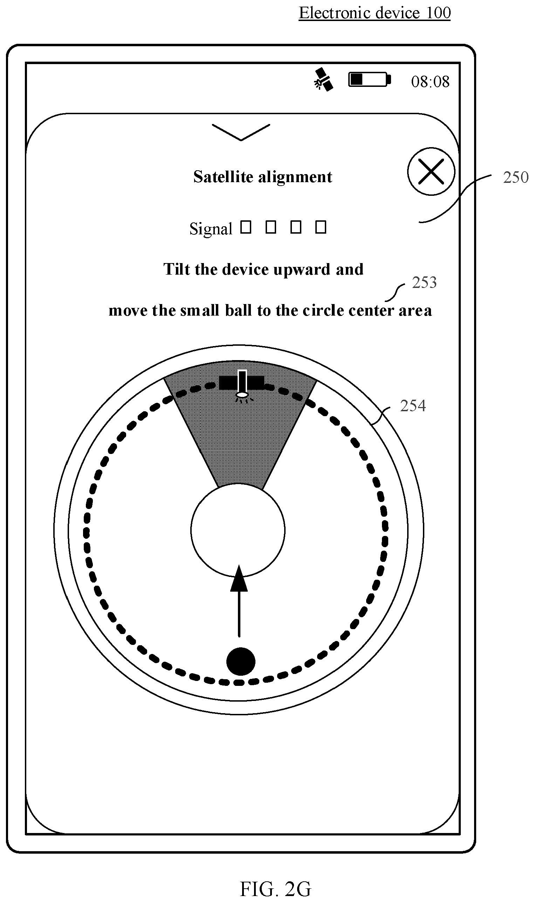

After the electronic device 100 is rotated to the right, so that the satellite is located in the sector area, as shown in FIG. 2G, the electronic device 100 may change the alignment operation prompt.

As shown in FIG. 2G, on the alignment page 250, the text prompt 253 may be "Tilt the device upward and move the small ball to the circle center area". In the animation prompt 254, the satellite may be located in the sector area, and a pointing arrow may be displayed near the small ball, to indicate the user to tilt the device, so that the small ball moves upward. The pitch angle of the electronic device 100 relative to the satellite is adjusted when the small ball moves to the circle center area.

It may be understood that the alignment page 250 shown in FIG. 2G is merely an example. In some embodiments, the pitch angle of the electronic device 100 relative to the satellite may alternatively be different from that in the foregoing embodiment. In this case, a location of the small ball in the animation prompt may also be different from that in the foregoing embodiment shown in FIG. 2G. This is not limited in this application.

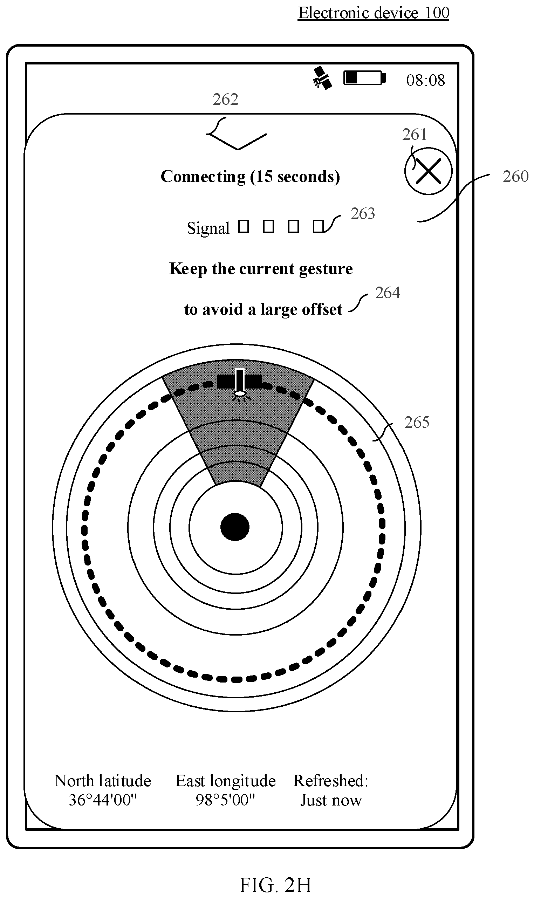

After the alignment is completed, the electronic device 100 may close the alignment page 250, and display a satellite connection page 260 on the desktop, as shown in FIG. 2H.

As shown in FIG. 2H, the satellite connection page 260 may include a disable control 261, a widget display control 262, a strength indicator 263, and an operation prompt (including a text prompt 264 and an animation prompt 265). Optionally, the satellite connection page 260 may further display current longitude and latitude information of the electronic device 100, for example, north latitude 36°44'00" and east longitude 98°5'00", and may further display update time of the longitude and the latitude, for example, refreshed: just now. For function descriptions of the disable control 261 and the strength indicator 263, refer to the function descriptions of the related controls in the foregoing embodiment. Details are not described herein again. The widget display control 262 may be configured to trigger the electronic device 100 to disable displaying of the satellite connection page 260, and display a satellite live widget, where the satellite live widget includes a part or an entirety of content in the satellite connection page 260. The operation prompt may indicate an operation of the user in a satellite connection process. For example, the text prompt 264 may be text "Keep the current gesture to avoid a large offset". The animation prompt 265 may prompt the user whether the posture of holding the device is correct. For example, the satellite is located in the sector area, and the small ball is located in the circle center area. In this case, the posture of the user holding the device is correct. In another case, the user needs to adjust the posture of holding the device. The animation prompt 265 may further display a plurality of concentric circles, to indicate that the electronic device 100 is establishing a communication connection to the satellite. In addition, a title "Connecting" may be further displayed on the satellite connection page 260, to prompt the user that the electronic device 100 is currently establishing the communication connection to the satellite. Optionally, a countdown may be further displayed next to the title, for example, "15 seconds".

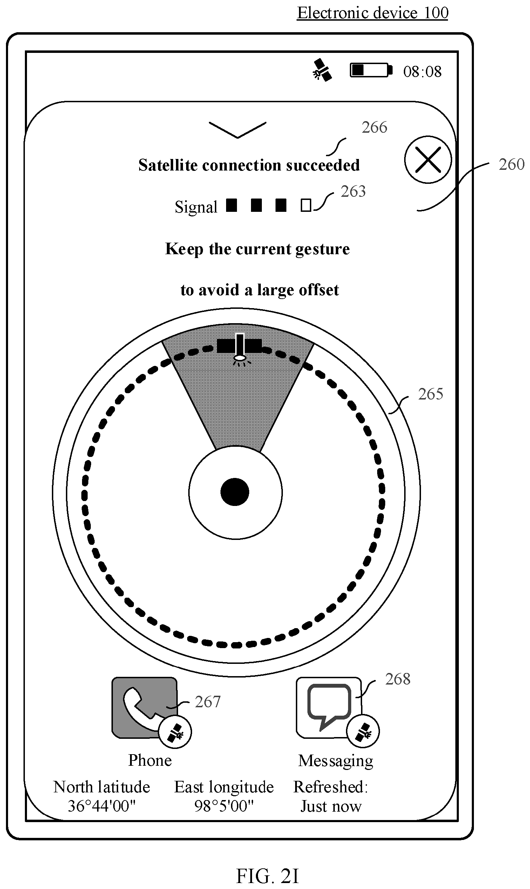

After the electronic device 100 successfully establishes the connection to the satellite, as shown in FIG. 2I, the electronic device 100 may change a strength of a signal in the strength indicator 263, and display a connection success prompt 266.

The signal strength in the strength indicator 263 shown in FIG. 2I is three bars, while the signal strength in the strength indicator 263 shown in FIG. 2H is zero bar. The connection success prompt 266 may be changed from the title "Connecting" shown in FIG. 2H to "Satellite connection succeeded". In addition, the electronic device 100 may further display a phone application icon 267 and a messaging application icon 268 on the satellite connection page 260, and a satellite symbol is displayed on both the two application icons, to prompt the user that the satellite communication mode is currently used. In addition, after successfully establishing the connection to the satellite, the electronic device 100 may disable displaying of the plurality of concentric circles in the animation prompt 265, to prompt the user that the communication connection has been established.

Optionally, FIG. 2A to FIG. 2I show that when the electronic device 100 cannot receive the cellular network signal, the electronic device 100 receives the user operations to establish the satellite communication connection to the satellite device. In another embodiment, when the electronic device 100 receives the cellular network signal, the electronic device 100 may receive the user operations to establish the satellite communication connection to the satellite device. This is not limited in this application.

The electronic device 100 maintains the satellite communication connection to the satellite 200, and prompts the user whether to switch to the cellular network.

In some embodiments, after establishing the satellite communication connection to the satellite 200, the electronic device 100 may automatically detect a cellular signal near the electronic device 100, and prompt, after detecting the cellular signal, the user to switch to the cellular network. The user does not need to manually disable the satellite communication connection and then switch to the cellular network.

FIG. 3A to FIG. 3H are UI diagrams in which an electronic device 100 may prompt, after establishing a satellite communication connection to a satellite 200, a user to switch to a cellular network.

For example, as shown in FIG. 3A, after the electronic device 100 establishes the satellite communication connection to the satellite 200, if the electronic device 100 closes the satellite connection page 260, the electronic device 100 may display a desktop shown in FIG. 3A. The desktop shown in FIG. 3A includes a plurality of application icons, and further includes a satellite live capsule 3101. The satellite live capsule 3101 may include a strength indicator, used to prompt the user with a current satellite signal strength. For example, it can be learned from the satellite live capsule 3101 shown in FIG. 3A that, the current satellite signal strength is three bars.

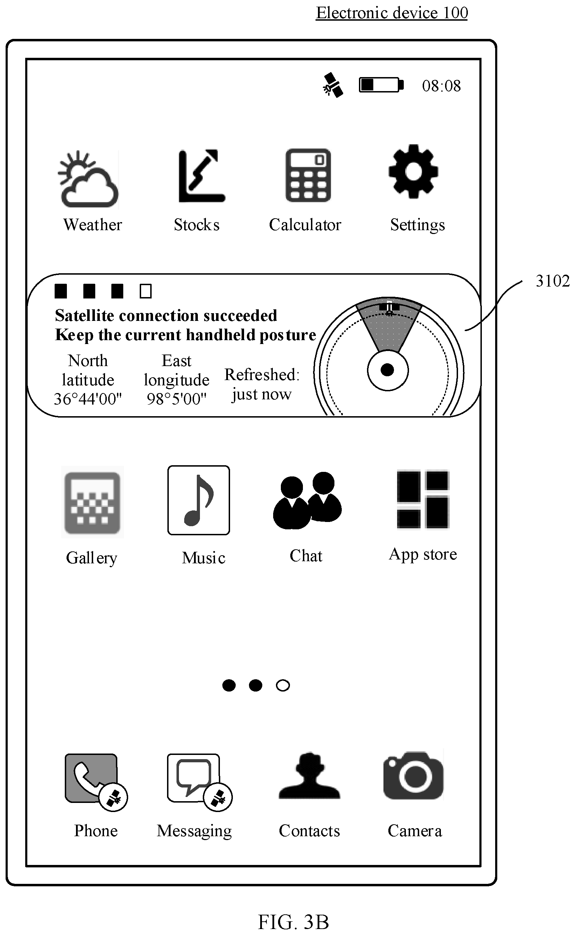

Optionally, after the electronic device 100 establishes the satellite communication connection to the satellite 200, if the electronic device 100 closes the satellite connection page 260, the electronic device 100 may also display the desktop shown in FIG. 3B. The desktop shown in FIG. 3B includes a plurality of application icons, and further includes a satellite live widget 3102. The satellite live widget 3102 may be used to prompt the user that the electronic device 100 has successfully established the communication connection to the satellite. The satellite live widget 3102 may include the strength indicator, an operation prompt, longitude and latitude information, and the like. The strength indicator is used to prompt the user with the current satellite signal strength. For example, it can be learned from the satellite live widget 3102 shown in FIG. 3B that, the current satellite signal strength is three bars. The operation prompt is used to prompt the user to maintain or adjust a current posture of holding the electronic device to aim at the satellite 200.

In some embodiments, the electronic device 100 may receive an input operation performed by the user on the satellite live capsule 3101 shown in FIG. 3A, for example, a tap operation. In response to the input operation of the user, the electronic device 100 may display the satellite live widget 3102 shown in FIG. 3B.

In the following embodiment of this application, an example in which the electronic device 100 displays the satellite live widget 3102 after closing the satellite connection page 260 is used for description.

In some embodiments, the electronic device 100 may periodically/aperiodically detect a cellular signal type near the electronic device 100, and detect whether the electronic device 100 is in coverage of the cellular network.

The electronic device 100 may also obtain a cellular signal type corresponding to a SIM card inserted into the electronic device 100.

The electronic device 100 may receive the cellular signal through an antenna. If a signal type of the cellular signal that can be received by the electronic device 100 through the antenna is the same as the cellular signal type corresponding to the SIM card inserted into the electronic device 100, the electronic device 100 may prompt the user whether to switch to the cellular network. When the user determines to switch to the cellular network, the electronic device 100 may disconnect the satellite communication connection from the satellite 200, and establish a connection to the base station 300, so that the electronic device 100 can use a cellular network provided by the base station 300, and send a message to another electronic device via the base station 300. When the user determines not to switch to the cellular network, the electronic device 100 may continue to maintain the satellite communication connection to the satellite 200.

Optionally, the electronic device 100 may alternatively detect the signal strength of the cellular signal received by the electronic device 100 through the antenna. When the signal type of the cellular signal that can be received by the electronic device 100 through the antenna is the same as the cellular signal type corresponding to the SIM card inserted into the electronic device 100, and the signal strength of the cellular signal received by the electronic device 100 through the antenna is greater than a first threshold, the electronic device 100 prompts the user whether to switch to the cellular network. In this way, it can be ensured that the electronic device 100 switches to the cellular network when the cellular signal is good.

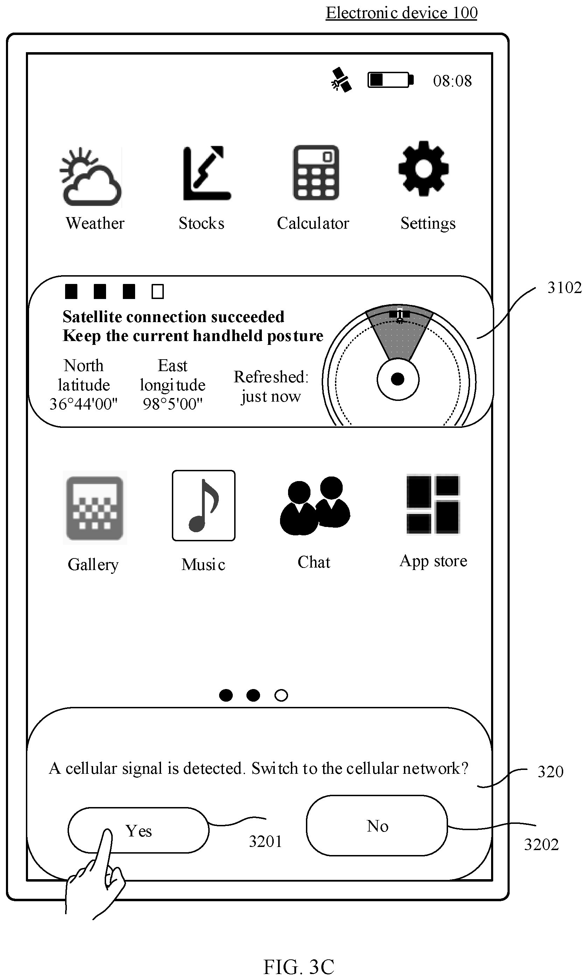

For example, the electronic device 100 may display prompt information 320 shown in FIG. 3C, and the prompt information 320 includes text "A cellular signal is detected. Do you want to switch to the cellular network?" The prompt information 320 is used to prompt the user whether to switch to the cellular network. The prompt information 320 further includes a yes option 3201 and a no option 3202. The user may determine, through the yes option 3201, to switch to the cellular network. The user may alternatively continue to maintain the satellite communication connection to the satellite 200 through the no option 3202, and does not switch to the cellular network.

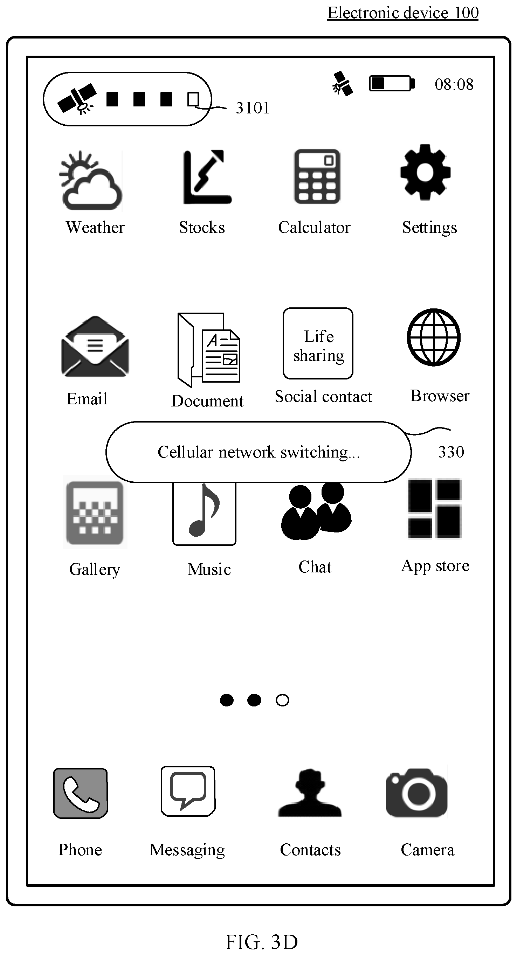

For example, as shown in FIG. 3C, the electronic device 100 may receive an input operation performed by the user on the yes option 3201 in the prompt information 320, for example, a tap operation. In response to the input operation of the user, the electronic device 100 may display prompt information 330 shown in FIG. 3D. The prompt information 330 includes text "Switching to the cellular network...", and the prompt information 330 is used to prompt the user that the electronic device 100 is switching to the cellular network.

After the electronic device 100 switches to the cellular network, the electronic device 100 may disconnect the satellite communication connection from the satellite 200.

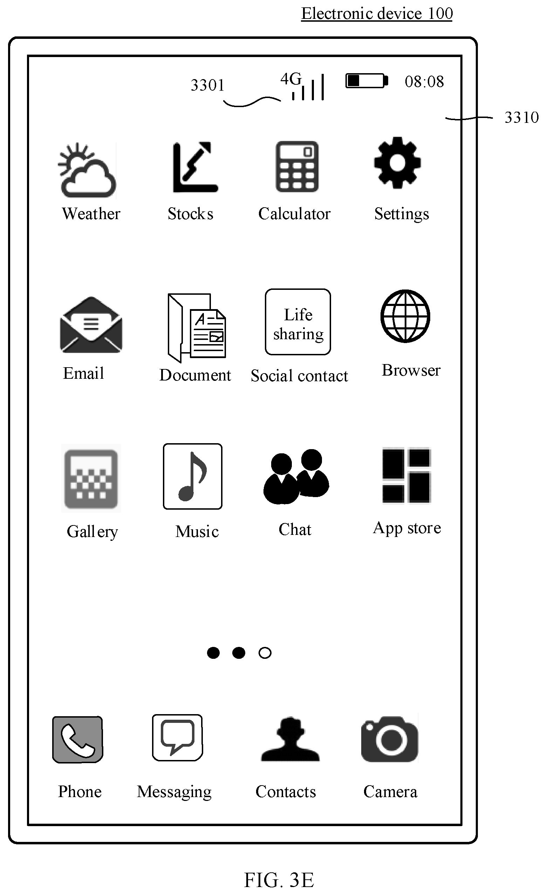

As shown in FIG. 3E, after the electronic device 100 switches to the cellular network, the electronic device 100 may display a user interface 3310 shown in FIG. 3E. The user interface 3310 includes application icons of a plurality of applications. The user interface does not include the satellite live widget 3102, to indicate that the electronic device 100 has disconnected the satellite communication connection from the satellite 200. The user interface 3310 further includes a cellular network identifier 3301, and the cellular network identifier 3301 indicates a signal strength of the cellular network currently used by the electronic device 100. For example, the signal strength of the current cellular network is four signal bars.

In some embodiments, when a plurality of SIM cards are inserted into the electronic device 100, for example, a SIM card 1 and a SIM card 2, the SIM card 1 and the SIM card 2 correspond to a same cellular signal type. When the electronic device 100 detects that the signal type of the cellular signal received by the antenna is also the same as the cellular signal type corresponding to the SIM card 1 and the SIM card 2, the electronic device 100 may simultaneously display a signal strength of a cellular network corresponding to the SIM card 1 and the SIM card 2.

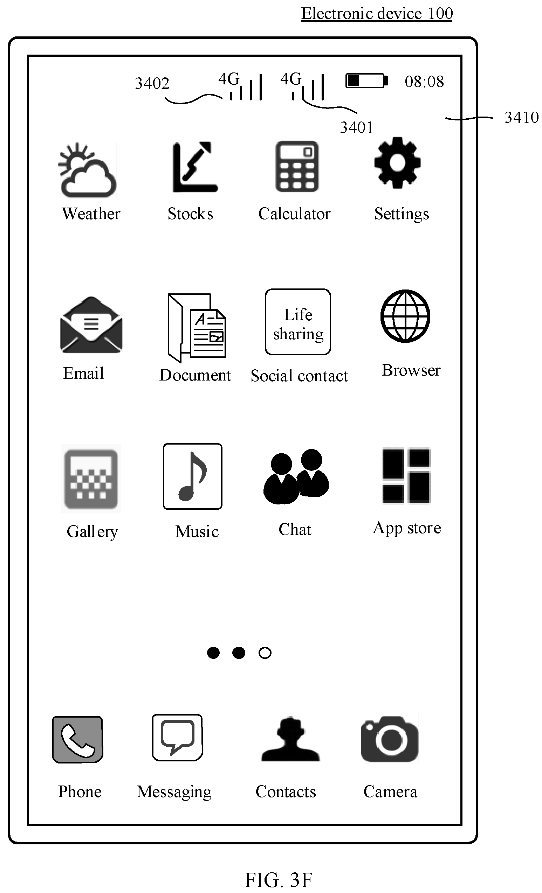

As shown in FIG. 3F, after the electronic device 100 switches to the cellular network, the electronic device 100 may display a user interface 3410 shown in FIG. 3F. The user interface 3410 includes application icons of a plurality of applications. The user interface does not include the satellite live widget 3102, to indicate that the electronic device 100 has disconnected the satellite communication connection from the satellite 200. The user interface 3310 further includes a cellular network identifier 3401 and a cellular network identifier 3402, where the cellular network identifier 3401 indicates a signal strength of a cellular network corresponding to the SIM card 1, and the cellular network identifier 3402 indicates a signal strength of a cellular network corresponding to the SIM card 2. Both the signal strength of the cellular network corresponding to the SIM card 1 and the signal strength of the cellular network corresponding to the SIM card 2 are four signal bars.

In some embodiments, when a plurality of different SIM cards are inserted into the electronic device 100, for example, a SIM card 1 and a SIM card 2, the SIM card 1 and the SIM card 2 correspond to different cellular signal types. When the electronic device 100 detects that the signal types of the cellular signals received by the antenna also include a plurality of signal types, and the plurality of cellular signal types respectively match the cellular signal types corresponding to the SIM card 1 and the SIM card 2 inserted into the electronic device 100, the electronic device 100 may also prompt the user to select one or more cellular networks that need to be switched.

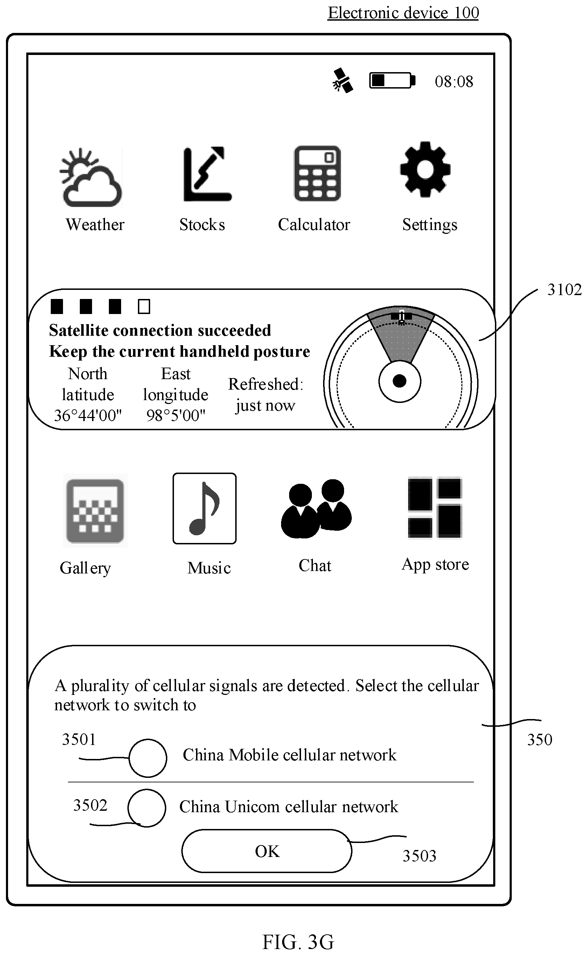

For example, as shown in FIG. 3G, the electronic device 100 may display prompt information 350 shown in FIG. 3G. The prompt information 350 includes text "A plurality of cellular signals are detected, and a to-be-switched cellular network needs to be selected". The prompt information 350 is used to prompt the user with a type of the to-be-switched cellular network. The prompt information 350 further includes an option 3501, an option 3502, and an option 3503. The user may switch to a China Mobile cellular network through the option 3501, or the user may switch to a China Unicom cellular network through the option 3502, or the user may switch to both a China Mobile cellular network and a China Unicom cellular network through the option 3501 and the option 3502.

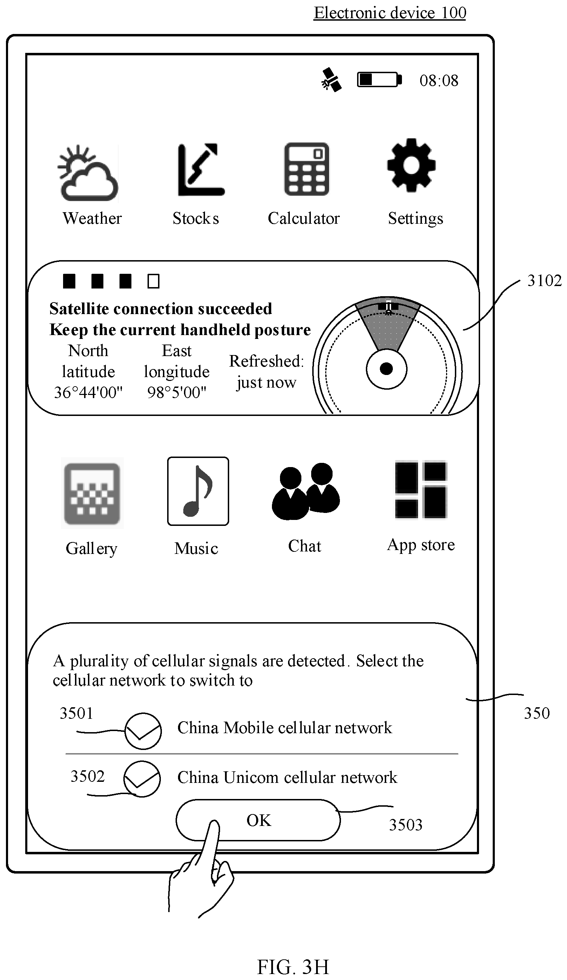

For example, as shown in FIG. 3H, the user may select the option 3501 and the option 3502. Then, the electronic device 100 may receive an input operation performed by the user on the option 3503 in the prompt information 350, for example, a tap operation. In response to the input operation of the user, the electronic device 100 may determine to switch to both the China Mobile cellular network and the China Unicom cellular network.

In response to switching to both the China Mobile cellular network and the China Unicom cellular network, the electronic device 100 may display a user interface 3410 similar to that shown in FIG. 3F, and display a cellular network identifier 3401 and a cellular network identifier 3402 in the user interface 3410. The cellular network identifier 3401 indicates a signal strength corresponding to the China Mobile cellular network, and the cellular network identifier 3402 indicates a signal strength corresponding to the China Unicom cellular network.

Optionally, the China Mobile cellular network and the China Unicom cellular network are merely used to explain this application, and do not constitute a limitation.

Optionally, FIG. 3A to FIG. 3H show that when the electronic device 100 displays the desktop, the electronic device 100 prompts the user whether to switch to the cellular network. In another embodiment, the electronic device 100 may also prompt, when displaying a user interface of another application, the user whether to switch to the cellular network. FIG. 3A to FIG. 3E are merely examples for description, and are not limited.

FIG. 4A to FIG. 4C are a schematic flowchart of a method for prompting, by an electronic device 100 after the electronic device 100 establishes a satellite communication connection to a satellite 200, a user whether to switch to a cellular network.

Modules in an embodiment in FIG. 4A to FIG. 4C may include the satellite setting application, the cellular modem, and the vendor-RIL that are shown in FIG. 1C. The cellular modem further includes a satellite communication modem (modem) 18.

As shown in FIG. 4A to FIG. 4C, after the electronic device 100 establishes the satellite communication connection to the satellite 200, an interaction procedure in which the electronic device 100 prompts the user whether to switch to the cellular network and that is of internal modules may include the following steps.

S401: The satellite communication modem (modem) 18 establishes the satellite communication connection to the satellite 200.

In some embodiments, when the electronic device 100 is in an area without cellular network coverage, the electronic device 100 may also receive a user operation to establish the satellite communication connection to the satellite 200, so that the electronic device 100 can communicate with another device by using the satellite 200.

Optionally, when the electronic device 100 establishes the satellite communication connection to the satellite 200, the satellite communication modem (modem) 18 in the electronic device 100 is in a power-on state.

It can be learned from the software architecture of the electronic device 100 shown in FIG. 1G that the cellular modem includes the satellite modem 18, and the vendor-RIL includes the satellite interface layer. The cellular modem may interact with an upper-layer function module or an upper-layer application by using the vendor-RIL, and the satellite modem 18 may also interact with the upper-layer function module or the upper-layer application by using the satellite interface layer. The cellular modem and the satellite modem 18 may communicate with each other. For example, when a communication status between the electronic device 100 and the satellite is an idle state, the satellite modem may send a first instruction to the cellular modem, where the first instruction indicates the cellular modem to receive a cellular signal and detect a cellular signal type and/or a cellular signal strength, to determine whether to switch to the cellular network. When it is determined that the satellite communication connection is disconnected, the cellular modem may also send a second instruction to the satellite modem, where the second instruction indicates the satellite modem to disconnect from the satellite.

S402: The cellular modem detects the type of the cellular signal received by the antenna.

Optionally, the signal type of the cellular signal received by the antenna may include one or more types, for example, a China Mobile cellular signal, a China Unicom cellular signal, and a China Telecom cellular signal.

In some embodiments, after the satellite communication modem (modem) 18 establishes the satellite communication connection to the satellite 200, the cellular modem is in the power-on state, and the cellular modem may periodically/aperiodically/at an interval of specific duration detect the signal type of the cellular signal received by the antenna.

For example, the specific duration may be 5 ms, and the cellular modem detects the signal type of the cellular signal received by the antenna every 5 ms.

Optionally, the electronic device 100 may alternatively detect, when the electronic device 100 is in a busy state, the signal type of the cellular signal received by the antenna on the electronic device 100, or the electronic device 100 may alternatively detect, when the electronic device 100 is in the idle state, the signal type of the cellular signal received by the antenna on the electronic device 100. This is not limited in this application.

That the electronic device 100 is in the idle state may mean that there is no to-be-transmitted data between the electronic device 100 and the satellite 200. For example, the electronic device 100 has no data to be sent to the satellite 200, and the electronic device 100 has no data to be received from the satellite 200.

That the electronic device 100 is in the busy state may mean that there is to-be-transmitted data between the electronic device 100 and the satellite 200. For example, the electronic device 100 has data to be sent to the satellite 200, or the electronic device 100 is sending data to the satellite 200, or the electronic device 100 has data to be received from the satellite 200, or the electronic device 100 is receiving data sent by the satellite 200.

For example, that the electronic device 100 is in the busy state may mean that the electronic device 100 establishes a satellite call with the electronic device 400 by using the satellite 200, or may mean that the electronic device 100 is sending an SMS message to the another device by using the satellite 200, or may mean that the electronic device 100 is receiving an SMS message sent by the another device by using the satellite 200.

For example, that the electronic device 100 is in the idle state may mean that the electronic device 100 does not establish a satellite call with the satellite 200, for example, the electronic device 100 shown in FIG. 3A to FIG. 3H establishes the satellite communication connection only with the satellite 200, and does not establish the satellite call connection to another electronic device by using the satellite 200, or may mean that the electronic device 100 does not send an SMS message to another device by using the satellite 200, or may mean that the electronic device 100 does not receive, by using the satellite 200, an SMS message sent by the another device, or the like.

In some embodiments, that the electronic device 100 is in the idle state may also mean that the satellite communication connection of the electronic device is in the idle state.

When the satellite communication connection of the electronic device is in the idle state, the satellite modem 18 may send a first instruction to the cellular modem, where the first instruction indicates the cellular modem to start to receive a cellular signal and detect a cellular signal type and/or a cellular signal strength. When it is determined that the cellular signal type is the same as the cellular signal type in the electronic device 100, and/or the cellular signal strength is greater than a first threshold, the cellular modem may switch to the cellular network. When the user determines to switch to the cellular network, the cellular modem may also send a second instruction to the satellite modem 18, where the second instruction indicates the satellite modem 18 to disconnect from the satellite 200.

Optionally, after receiving the first instruction, the cellular modem may send a first message to a first application by using the vendor-RIL, where the first message indicates the first application to display prompt information, and the prompt information is used to prompt the user whether to switch to the cellular network. When the user determines to switch to the cellular network, the first application may send a second information to the cellular modem by using the vendor-RIL. In response to the second message, the cellular modem may send the second instruction to the satellite modem 18, where the second instruction indicates the satellite modem 18 to disconnect from the satellite 200. After receiving the second message, the cellular modem may switch to the cellular network. After receiving the second instruction, the satellite modem 18 may disconnect from the satellite 200.

Optionally, that the electronic device 100 is in the idle state and that the electronic device 100 is in the busy state may further include other explanations. This is not limited in this application either.

S403: The cellular modem needs to determine whether the cellular signal type is the same as the cellular signal type in the electronic device 100.

After obtaining the cellular signal received by the antenna, the cellular modem may detect the signal type of the cellular signal received by the antenna.

The signal type of the cellular signal received by the antenna may include but is not limited to any one or more of the following: the China Mobile cellular signal, the China Unicom cellular signal, the China Telecom cellular signal, and the like.

The cellular modem may also obtain a cellular signal type corresponding to a SIM card or an eSIM card inserted into the electronic device 100.

The cellular signal type corresponding to the SIM card or the eSIM card inserted into the electronic device 100 may include but is not limited to any one or more of the following: the China Mobile cellular signal, the China Unicom cellular signal, the China Telecom cellular signal, and the like.

In some embodiments, a plurality of SIM cards or a plurality of eSIM cards may be inserted into the electronic device 100. Cellular signal types corresponding to the plurality of SIM cards or the plurality of eSIM cards may be the same or different.

After obtaining the signal type of the cellular signal received by the antenna, the cellular modem may determine whether the signal type of the cellular signal received by the antenna is the same as the cellular signal type corresponding to the SIM card or the eSIM card inserted into the electronic device 100.

In some embodiments, when a plurality of different SIM cards or eSIM cards are inserted into the electronic device 100, the different SIM cards or eSIM cards correspond to different cellular signal types. When the electronic device 100 detects that there are also a plurality of the signal types of the cellular signals received by the antenna, and the plurality of cellular signal types are respectively the same as the cellular signal types respectively corresponding to the plurality of SIM cards or the plurality of eSIM cards inserted into the electronic device 100, the electronic device 100 may also simultaneously switch to connect to a plurality of different types of cellular networks.

If the signal type of the cellular signal received by the antenna is the same as the cellular signal type corresponding to the SIM card or the eSIM card inserted into the electronic device 100, the cellular modem may switch to the cellular network and S404 is performed.

If the signal type of the cellular signal received by the antenna is different from the cellular signal type corresponding to the SIM card or the eSIM card inserted into the electronic device 100, the cellular modem cannot switch to the cellular network, and S415 is performed.

S404: The cellular modem detects the strength of the cellular signal received by the antenna.

Optionally, the cellular modem may periodically/aperiodically/at an interval of specific duration detect the signal strength of the cellular signal received by the antenna.

For example, the specific duration may be 5 ms, and the cellular modem detects the signal strength of the cellular signal received by the antenna every 5 ms.

Optionally, if there are a plurality of signal types of the cellular signal received by the antenna, the cellular modem may detect a cellular signal strength corresponding to each of the plurality of types of cellular signals.

In some embodiments, when it is determined that the cellular signal type is the same as the cellular signal type corresponding to the SIM card or the eSIM card inserted into the electronic device 100, before switching to the cellular network, the cellular modem may detect the signal strength of the cellular signal received by the antenna, and when the signal strength of the cellular signal received by the antenna is greater than the first threshold, prompt the user whether to switch to the cellular network. In this way, it can be ensured that the electronic device 100 switches to the cellular network when the cellular signal is good.

Optionally, the electronic device 100 may alternatively detect, when the electronic device 100 is in the busy state, the signal strength of the cellular signal received by the antenna on the electronic device 100, or the electronic device 100 may alternatively detect, when the electronic device 100 is in the idle state, the signal strength of the cellular signal received by the antenna on the electronic device 100. This is not limited in this application.

For explanations of the busy state and the idle state of the electronic device 100, refer to the descriptions in S402.

S405: The cellular modem needs to determine whether the cellular signal strength is greater than the first threshold.

After obtaining the signal strength of the cellular signal received by the antenna, the cellular modem may determine whether the cellular signal strength is greater than the first threshold.

If the signal strength of the cellular signal received by the antenna is greater than the first threshold, it indicates that the cellular signal is good, and the cellular modem may prompt, through an application layer, the user whether to switch to the cellular network, that is, S406 to S414 are performed.

If the signal strength of the cellular signal received by the antenna is less than the first threshold, it indicates that the cellular signal is poor, and the cellular modem may not prompt the user whether to switch to the cellular network, that is, S415 is performed.

Optionally, S404 and S405 may not be performed.

S406: The cellular modem sends the first message to the vendor-RIL.

The first message prompts, through the first application, the user whether to switch to the cellular network.

For example, the first application may be a system setting application, or may be a satellite device application.

S407: The vendor-RIL sends the first message to the satellite setting application.

It can be learned from the software architecture of the electronic device 100 shown in FIG. 1C that the vendor-RIL includes a satellite interface layer (satellite-RIL). When the satellite communication modem (modem) 18 establishes the satellite communication connection to the satellite 200, the satellite interface layer (satellite-RIL) is in the power-on state, and the vendor-RIL is also in the power-on state.

Optionally, the first message may alternatively be sent to the satellite setting application through the satellite interface layer (satellite-RIL).

S408: In response to the first message, the satellite setting application prompts the user whether to switch to the cellular network.

When the cellular modem determines that the signal type of the cellular signal received by the antenna is the same as the cellular signal type corresponding to the SIM card or the eSIM card inserted into the electronic device 100, the cellular modem may send the first message to the vendor-RIL, and then the vendor-RIL sends the first message to the satellite setting application. In response to the first message, the satellite setting application may prompt the user whether to switch to the cellular network.

Optionally, when the cellular modem determines that the signal type of the cellular signal received by the antenna is the same as the cellular signal type corresponding to the SIM card or the eSIM card inserted into the electronic device 100, and the signal strength of the cellular signal received by the antenna is greater than the first threshold, the cellular modem sends the first message to the vendor-RIL.

In some embodiments, that the satellite setting application prompts the user whether to switch to the cellular network may be displaying the prompt information 320 shown in FIG. 3C.

In some embodiments, when a plurality of different SIM cards are inserted into the electronic device 100, for example, a SIM card 1 and a SIM card 2, the SIM card 1 and the SIM card 2 correspond to different cellular signal types. When the electronic device 100 detects that the signal types of the cellular signals received by the antenna also include a plurality of signal types, and the plurality of cellular signal types respectively match the cellular signal types corresponding to the SIM card 1 and the SIM card 2 inserted into the electronic device 100, the electronic device 100 may also prompt the user to select one or more cellular networks that need to be switched. That the satellite setting application prompts the user whether to switch to the cellular network may be displaying the prompt information 350 shown in FIG. 3G. Similarly, an implementation of the plurality of eSIM cards is similar to an implementation of the plurality of SIM cards.

After the user is prompted whether to switch to the cellular network, the electronic device 100 performs S409 to S412 when the user determines to switch to the cellular network.

After the user is prompted whether to switch to the cellular network, the electronic device 100 performs S413 to S415 when the user determines not to switch to the cellular network.

Optionally, to avoid a case in which data transmission fails because the electronic device 100 switches to the cellular network when the electronic device 100 and the satellite 200 transmit data, the electronic device 100 may prompt, when the electronic device 100 is in an idle state, the user whether to switch to the cellular network.

For an explanation of the idle state of the electronic device 100, refer to the description in S402.

S409: The satellite setting application sends the second message to the vendor-RIL.

The second message is used to notify the cellular modem that the cellular network is agreed to be switched to.

S410: The vendor-RIL sends the second message to the cellular modem.

S411: In response to the second message, the satellite communication modem (modem) 18 disconnects the satellite communication connection from the satellite 200.

S412: In response to the second message, the cellular modem establishes a cellular network connection to the base station 300.

For example, a user operation for determining switching to the cellular network may be the input operation on the yes option 3201 in the prompt information 320 shown in FIG. 3C, for example, the tap operation.

After the user determines to switch to the cellular network, the satellite setting application may send the second message to the vendor-RIL. The vendor-RIL then sends the second message to the cellular modem.

After receiving the second message, the cellular modem may establish the cellular network connection to the base station 300.

After receiving the second message, the satellite communication modem (modem) 18 in the cellular modem may disconnect the satellite communication connection from the satellite 200.

Optionally, after receiving the second message, the cellular modem may send a second instruction to the satellite modem 18, where the second instruction indicates the satellite modem 18 to disconnect the satellite communication connection from the satellite 200. In response to the second instruction, the satellite modem 18 may disconnect the satellite communication connection from the satellite 200.

Optionally, after the satellite communication modem (modem) 18 disconnects the satellite communication connection from the satellite 200, the satellite communication modem (modem) 18 may be in a power-off state, or may be in the power-on state. This is not limited in this application.

After the satellite communication modem (modem) 18 disconnects the satellite communication connection from the satellite 200, the cellular modem is still in the power-on state, so that the electronic device 100 may establish the cellular network connection to the base station 300 by using the cellular modem, and the electronic device 100 may use the cellular network.

For example, as shown in FIG. 1H, after receiving the second message, the satellite modem 18 disconnects the satellite communication connection from the satellite 200, and after the cellular modem establishes the cellular network connection to the base station 300, the cellular modem may interact with the upper-layer function module or the upper-layer application by using the vendor-RIL. When the electronic device 100 needs to communicate with the base station 300, the application layer of the electronic device 100 may send cellular communication data to the vendor-RIL, and then the vendor-RIL sends the cellular communication data to the cellular modem. Finally, the cellular modem sends the cellular communication data to the base station 300, and the base station 300 sends the cellular communication data to the another electronic device. Similarly, the base station 300 may receive the cellular communication data sent by the another electronic device, then the base station 300 sends the cellular communication data to the cellular modem, and the cellular modem sends the cellular communication data to the vendor-RIL. Finally, the vendor-RIL sends the cellular communication data to the application layer of the electronic device 100.

S413: The satellite setting application sends a third message to the vendor-RIL.

The third message indicates the cellular modem that the user does not switch to the cellular network.

S414: The vendor-RIL sends the third message to the cellular modem.

S415: The satellite communication modem (modem) 18 continues to maintain the satellite communication connection to the satellite 200.

For example, the user operation for determining not to switch to the cellular network may be an input operation on the no option 3202 in the prompt information 320 shown in FIG. 3C, for example, a tap operation.

After the user determines not to switch to the cellular network, the satellite setting application may send the third message to the vendor-RIL. The vendor-RIL then sends the third message to the cellular modem.

After receiving the third message, the satellite communication modem (modem) 18 in the vendor-RIL may continue to maintain the satellite communication connection to the satellite 200.

Optionally, after receiving the third message, the satellite communication modem (modem) 18 in the vendor-RIL is still in the power-on state, and the cellular modem is also in the power-on state.

Optionally, after obtaining the third message, that is, after the cellular modem determines that the user does not switch to the cellular network currently, the cellular modem may stop detecting the cellular signal type and stop detecting the cellular signal strength, to reduce power consumption of the electronic device 100.

Optionally, after the cellular modem obtains the third message, and stops detecting the cellular signal type and stops detecting the cellular signal strength, if the electronic device 100 is disconnected from the satellite 200 and then reconnected to the satellite 200, the cellular modem may detect the cellular signal type and the cellular signal strength again, and prompt, according to the method provided in the embodiment in FIG. 4A to FIG. 4C, the user again whether to switch to the cellular network.

In some embodiments, after the user is prompted whether to switch to the cellular network, the electronic device 100 may not perform S413 and S414 when the user determines not to switch to the cellular network. This is not limited in this application.

For example, as shown in FIG. 1G, after receiving the third message, the satellite modem 18 still maintains the satellite communication connection to the satellite 200, and the satellite modem 18 may interact with the upper-layer function module or the upper-layer application through the vendor-RIL or the satellite interface layer. When the electronic device 100 needs to communicate with the satellite 200, the application layer of the electronic device 100 may send satellite communication data to the vendor-RIL or the satellite-RIL in the vendor-RIL, and the vendor-RIL or the satellite-RIL in the vendor-RIL sends the satellite communication data to the satellite modem in the cellular modem. Finally, the satellite modem in the cellular modem sends the satellite communication data to the satellite 200, and the satellite 200 sends the satellite communication data to another electronic device. Similarly, the satellite 200 may receive satellite communication data sent by the another electronic device, and the satellite 200 then sends the satellite communication data to the satellite modem in the cellular modem, and the satellite modem in the cellular modem then sends the satellite communication data to the vendor-RIL or the satellite-RIL in the vendor-RIL. Finally, the vendor-RIL or the satellite-RIL in the vendor-RIL sends the satellite communication data to the application layer of the electronic device 100.

According to the method, after establishing the satellite communication connection to the satellite 200, the electronic device 100 may automatically detect the cellular signal near the electronic device 100, and prompt, after detecting the cellular signal, the user to switch to the cellular network. The user does not need to manually disable the satellite communication connection and then switch to the cellular network, thereby reducing user operations and improving user experience.

FIG. 5 is a schematic flowchart of a communication method according to this application.

S501: An electronic device establishes a satellite communication connection to a satellite.

For an implementation of establishing the satellite communication connection between the electronic device and the satellite, refer to the descriptions in the embodiments in FIG. 2A to FIG. 2I.

S502: The electronic device receives a cellular signal, where the cellular signal includes a first cellular signal type.

For example, the first cellular signal type may include at least any one of the following: a China Mobile signal, a China Unicom signal, and a China Telecom signal.

S503: The electronic device determines whether the first cellular signal type is the same as a second cellular signal type in the electronic device.

For example, the second cellular signal type in the electronic device is a cellular signal type corresponding to a SIM card in the electronic device or a cellular signal type corresponding to an eSIM card in the electronic device.

S504: If the first cellular signal type is the same as the second cellular signal type in the electronic device, the electronic device prompts a user whether to switch to a first cellular network.

For example, prompt information may be the prompt information 320 shown in FIG. 3C or the prompt information 350 shown in FIG. 3G.

S505: The electronic device receives and responds to a first operation of the user, disconnects the satellite communication connection from the satellite, and switches to the first cellular network.

According to the method, after the electronic device establishes the communication connection to the satellite, the electronic device may detect the first cellular signal type of the received cellular signal, and when the first cellular signal type is the same as the second cellular signal type in the electronic device, the electronic device prompts the user to switch to the cellular network.

In a possible implementation, that the electronic device prompts the user whether to switch to the first cellular network specifically includes: If the first cellular signal type is the same as the second cellular signal type, and a signal strength of the cellular signal is greater than a first threshold, the electronic device prompts the user whether to switch to the first cellular network.

In this way, when the cellular signal strength is strong, the user may be prompted to switch to the cellular network, to improve user experience of using the cellular network.

In a possible implementation, that the electronic device receives the cellular signal specifically includes: The electronic device receives the cellular signal when the satellite communication connection of the electronic device is in an idle state.

In this way, when the satellite communication connection of the electronic device is in the idle state, the electronic device receives the cellular signal, so that power consumption can be reduced.

In a possible implementation, that the electronic device prompts the user whether to switch to the first cellular network specifically includes: When the satellite communication connection of the electronic device is in the idle state, the electronic device prompts the user whether to switch to the first cellular network.

In this way, when the satellite communication connection of the electronic device is in the idle state, the electronic device prompts the user whether to switch to the first cellular network, so that power consumption can be reduced.

In a possible implementation, that the electronic device disconnects the satellite communication connection from the satellite, and switches to the first cellular network specifically includes: When the satellite communication connection of the electronic device is in the idle state, the electronic device disconnects the satellite communication connection from the satellite, and switches to the first cellular network.

In this way, when the satellite communication connection of the electronic device is in the idle state, the electronic device disconnects the satellite communication connection from the satellite, to avoid affecting a satellite service, for example, a satellite call, sending a satellite SMS message, or receiving a satellite SMS message.

In a possible implementation, the electronic device includes a cellular modem, the cellular modem includes a satellite modem, and that the electronic device receives the cellular signal when the satellite communication connection of the electronic device is in the idle state specifically includes: The satellite modem of the electronic device sends a first instruction to the cellular modem when the satellite communication connection of the electronic device is the idle state; and the cellular modem of the electronic device receives the cellular signal in response to the first instruction.

For example, the cellular modem may be the cellular modem shown in FIG. 1F-1 to FIG. 1F-3 or the cellular modem shown in FIG. 1I-1 to FIG. 1I-4.

For example, the satellite modem may be the satellite modem 18 shown in FIG. 1F-1 to FIG. 1F-3, the satellite modem shown in FIG. 1I-1 to FIG. 1I-4, or the BeiDou modem shown in FIG. 1I-1 to FIG. 1I-4.

In a possible implementation, the electronic device includes the cellular modem, and the cellular modem includes the satellite modem; that the electronic device establishes the satellite communication connection to the satellite specifically includes: The satellite modem of the electronic device establishes the satellite communication connection to the satellite; and that the electronic device disconnects the satellite communication connection from the satellite, and switches to the first cellular network specifically includes: The satellite modem of the electronic device disconnects the satellite communication connection from the satellite, and the cellular modem of the electronic device switches to the first cellular network.

In a possible implementation, when the satellite modem of the electronic device establishes the satellite communication connection to the satellite, both the satellite modem and the cellular modem are in a power-on state.

In a possible implementation, the electronic device further includes a cellular wireless communication interface module and a first application; and that the electronic device prompts the user whether to switch to the first cellular network specifically includes: The cellular modem of the electronic device sends a first message to the cellular wireless communication interface module; the cellular wireless communication interface module of the electronic device sends the first message to the first application; and in response to the first message, the first application of the electronic device prompts the user whether to switch to the cellular network.

For example, the cellular wireless communication interface module may be the vendor-RIL shown in FIG. 1F-1 to FIG. 1F-3 or the vendor-RIL shown in FIG. 1I-1 to FIG. 1I-4.

In a possible implementation, the first application is a satellite setting application or a system setting device.

In a possible implementation, that the electronic device receives and responds to the first operation of the user, disconnects the satellite communication connection from the satellite, and switches to the first cellular network specifically includes: The electronic device receives and responds to the first operation of the user, and the first application of the electronic device sends a second message to the cellular wireless communication interface module; the cellular wireless communication interface module of the electronic device sends the second message to the cellular modem; in response to the second message, the cellular modem of the electronic device sends a second instruction to the satellite modem; in response to the second instruction, the satellite modem of the electronic device disconnects the satellite communication connection from the satellite; and the cellular modem of the electronic device switches to the first cellular network.

In a possible implementation, when the satellite modem of the electronic device disconnects the satellite communication connection from the satellite, and the cellular modem of the electronic device switches to the first cellular network, the cellular modem is in the power-on state, and the satellite modem is in a power-off state or the power-on state.

In a possible implementation, that the satellite communication connection of the electronic device is in the idle state includes: There is no to-be-transmitted data between the electronic device and the satellite.

In a possible implementation, that the satellite communication connection of the electronic device is in the idle state includes: The electronic device does not establish a satellite call with another device by using the satellite, or the electronic device does not send an SMS message to another electronic device by using the satellite, or the electronic device does not receive, by using the satellite, an SMS message sent by another electronic device.

In a possible implementation, when the electronic device establishes the satellite communication connection to the satellite by using the satellite modem, the electronic device displays a first widget, where the first widget includes a first indicator and first prompt information, the first indicator indicates a connection status between a first electronic device and the satellite, and the first prompt information is used to prompt the user to maintain or adjust a current posture of holding the first electronic device to align with a satellite device; and/or the electronic device displays a first capsule, where the first capsule includes a connection status between the first electronic device and the satellite; and when the electronic device disconnects the satellite communication connection from the satellite by using the satellite modem, the electronic device stops displaying the first widget or the first capsule.

For example, the first widget may be the satellite live widget 3102 shown in FIG. 3C or FIG. 3G.

FIG. 6 is a schematic flowchart of a communication method based on a communication apparatus according to this application.

The apparatus includes a cellular modem and a first application, and the cellular modem includes a satellite modem.

S601: The satellite modem is configured to establish a satellite communication connection to a satellite.

S602: The cellular modem is configured to receive a cellular signal, where the cellular signal includes a first cellular signal type.

S603: The cellular modem is further configured to determine whether the first cellular signal type is the same as a second cellular signal type in an electronic device.

S604: The first application is configured to: if the first cellular signal type is the same as the second cellular signal type in the electronic device, prompt a user whether to switch to a first cellular network.

S605: The first application is further configured to: receive and respond to a first operation of the user, control the satellite modem to disconnect the satellite communication connection from the satellite, and control the cellular modem to switch to the first cellular network.

In a possible implementation, the first application is specifically configured to: if the first cellular signal type is the same as the second cellular signal type, and a signal strength of the cellular signal is greater than a first threshold, prompt the user whether to switch to the first cellular network.

In a possible implementation, the cellular modem is specifically configured to receive the cellular signal when the satellite communication connection of the electronic device is in an idle state.

In a possible implementation, the first application is specifically configured to: when the satellite communication connection of the electronic device is in the idle state, prompt the user whether to switch to the first cellular network.

In a possible implementation, the first application is specifically configured to: when the satellite communication connection of the electronic device is in the idle state, control the satellite modem to disconnect the satellite communication connection from the satellite, and control the cellular modem to switch to the first cellular network.

In a possible implementation, the second cellular signal type in the electronic device is a cellular signal type corresponding to a SIM card in the electronic device or a cellular signal type corresponding to an eSIM card in the electronic device.

In a possible implementation, the satellite modem is further configured to send a first instruction to the cellular modem when the satellite communication connection of the electronic device is in the idle state; and the cellular modem is specifically configured to receive the cellular signal in response to the first instruction.

In a possible implementation, when the satellite modem of the electronic device establishes the satellite communication connection to the satellite, both the satellite modem and the cellular modem are in a power-on state.

In a possible implementation, the electronic device further includes a cellular wireless communication interface module, where the cellular modem is further configured to send a first message to the cellular wireless communication interface module; the cellular wireless communication interface module is configured to send the first message to the first application; and the first application is specifically configured to prompt, in response to the first message, the user whether to switch to the cellular network.

In a possible implementation, the first application is a satellite setting application or a system setting device.

In a possible implementation, the electronic device further includes the cellular wireless communication interface module, where the first application is specifically configured to send a second message to the cellular wireless communication interface module in response to the first operation of the user; the cellular wireless communication interface module is configured to send the second message to the cellular modem; the cellular modem is further configured to send a second instruction to the satellite modem; and the satellite modem is specifically configured to disconnect the satellite communication connection from the satellite in response to the second instruction.

In a possible implementation, when the satellite modem of the electronic device disconnects the satellite communication connection from the satellite, and the cellular modem of the electronic device switches to the first cellular network, the cellular modem is in the power-on state, and the satellite modem is in a power-off state or the power-on state.

In a possible implementation, that the satellite communication connection of the electronic device is in the idle state includes: There is no to-be-transmitted data between the electronic device and the satellite.

In a possible implementation, that the satellite communication connection of the electronic device is in the idle state includes: The electronic device does not establish a satellite call with another device by using the satellite, or the electronic device does not send an SMS message to another electronic device by using the satellite, or the electronic device does not receive, by using the satellite, an SMS message sent by another electronic device.

This application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the communication method shown in FIG. 5.

This application provides a computer-readable storage medium, including instructions. When the instructions are run on an electronic device, the electronic device is enabled to perform the communication method shown in FIG. 5.

This application provides a computer program product. The computer program product may include computer instructions. When the computer instructions are run on an electronic device, the electronic device is enabled to perform the communication method shown in FIG. 5.

This application provides a chip, the chip is applied to an electronic device, the chip includes one or more processors, and the processor is configured to invoke computer instructions, so that the electronic device performs the communication method shown in FIG. 5.

This application provides a communication apparatus. The apparatus includes a satellite modem, a cellular modem, and an interface circuit. The interface circuit is configured to receive code instructions and transmit the code instructions to the satellite modem and/or the cellular modem, and when the satellite modem and/or the cellular modem run/runs the code instructions, the electronic device is enabled to perform the communication method shown in FIG. 5.

Implementations of this application may be randomly combined to achieve different technical effects.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. The processes of the methods in embodiments are performed when the program is run. The foregoing storage medium includes any medium that can store program code, for example, a ROM, a random access memory RAM, a magnetic disk, or an optical disc.

In summary, what is described above is merely embodiments of the technical solutions of this application, but is not intended to limit the protection scope of this application. Any modification, equivalent replacement, improvement, or the like made according to the disclosure of this application shall fall within the protection scope of this application.

## Claims

1. A communication method, wherein the method comprises:
establishing, by an electronic device, a satellite communication connection to a satellite;
receiving, by the electronic device, a cellular signal, wherein the cellular signal comprises a first cellular signal type;
determining, by the electronic device, whether the first cellular signal type is the same as a second cellular signal type in the electronic device;
if the first cellular signal type is the same as the second cellular signal type in the electronic device, prompting, by the electronic device, a user whether to switch to a first cellular network; and
receiving and responding to, by the electronic device, a first operation of the user, disconnecting the satellite communication connection from the satellite, and switching to the first cellular network.

2. The method according to claim 1, wherein prompting, by the electronic device, the user whether to switch to the first cellular network specifically comprises:
if the first cellular signal type is the same as the second cellular signal type, and a signal strength of the cellular signal is greater than a first threshold, prompting, by the electronic device, the user whether to switch to the first cellular network.

3. The method according to claim 1 or 2, wherein receiving, by the electronic device, the cellular signal specifically comprises:
receiving, by the electronic device, the cellular signal when the satellite communication connection of the electronic device is in an idle state.

4. The method according to any one of claims 1 to 3, wherein prompting, by the electronic device, the user whether to switch to the first cellular network specifically comprises:
when the satellite communication connection of the electronic device is in the idle state, prompting, by the electronic device, the user whether to switch to the first cellular network.

5. The method according to any one of claims 1 to 4, wherein disconnecting, by the electronic device, the satellite communication connection from the satellite, and switching to the first cellular network specifically comprises:
when the satellite communication connection of the electronic device is in the idle state, disconnecting, by the electronic device, the satellite communication connection from the satellite, and switching to the first cellular network.

6. The method according to any one of claims 1 to 5, wherein the second cellular signal type in the electronic device is a cellular signal type corresponding to a SIM card in the electronic device or a cellular signal type corresponding to an eSIM card in the electronic device.

7. The method according to claim 3, wherein the electronic device comprises a cellular modem, the cellular modem comprises a satellite modem, and receiving, by the electronic device, the cellular signal when the satellite communication connection of the electronic device is in the idle state specifically comprises:
sending, by the satellite modem of the electronic device, a first instruction to the cellular modem when the satellite communication connection of the electronic device is the idle state; and
receiving, by the cellular modem of the electronic device, the cellular signal in response to the first instruction.

8. The method according to any one of claims 1 to 7, wherein the electronic device comprises the cellular modem, and the cellular modem comprises the satellite modem;
establishing, by the electronic device, the satellite communication connection to the satellite specifically comprises:
establishing, by the satellite modem of the electronic device, the satellite communication connection to the satellite; and
disconnecting, by the electronic device, the satellite communication connection from the satellite, and switching to the first cellular network specifically comprises:
disconnecting, by the satellite modem of the electronic device, the satellite communication connection from the satellite, and switching, by the cellular modem of the electronic device, to the first cellular network.

9. The method according to claim 8, wherein when the satellite modem of the electronic device establishes the satellite communication connection to the satellite, both the satellite modem and the cellular modem are in a power-on state.

10. The method according to any one of claims 7 to 9, wherein the electronic device further comprises a cellular wireless communication interface module and a first application; and
prompting, by the electronic device, the user whether to switch to the first cellular network specifically comprises:
sending, by the cellular modem of the electronic device, a first message to the cellular wireless communication interface module;
sending, by the cellular wireless communication interface module of the electronic device, the first message to the first application; and
in response to the first message, prompting, by the first application of the electronic device, the user whether to switch to the cellular network.

11. The method according to claim 10, wherein the first application is a satellite setting application or a system setting device.

12. The method according to claim 10 or 11, wherein receiving and responding to, by the electronic device, the first operation of the user, disconnecting the satellite communication connection from the satellite, and switching to the first cellular network specifically comprises:
receiving and responding to, by the electronic device, the first operation of the user, and sending, by the first application of the electronic device, a second message to the cellular wireless communication interface module;
sending, by the cellular wireless communication interface module of the electronic device, the second message to the cellular modem;
in response to the second message, sending, by the cellular modem of the electronic device, a second instruction to the satellite modem;
in response to the second instruction, disconnecting, by the satellite modem of the electronic device, the satellite communication connection from the satellite; and
switching, by the cellular modem of the electronic device, to the first cellular network.

13. The method according to claim 12, wherein when the satellite modem of the electronic device disconnects the satellite communication connection from the satellite, and the cellular modem of the electronic device switches to the first cellular network, the cellular modem is in the powered-on state, and the satellite modem is in a powered-off state or the powered-on state.

14. The method according to any one of claims 3 to 5, wherein that the satellite communication connection of the electronic device is in the idle state comprises: there is no to-be-transmitted data between the electronic device and the satellite.

15. The method according to claim 14, wherein that the satellite communication connection of the electronic device is in the idle state comprises: the electronic device does not establish a satellite call with another device by using the satellite, or the electronic device does not send an SMS message to another electronic device by using the satellite, or the electronic device does not receive, by using the satellite, an SMS message sent by another electronic device.

16. The method according to any one of claims 1 to 15, wherein when the electronic device establishes the satellite communication connection to the satellite by using the satellite modem, the electronic device displays a first widget, wherein the first widget comprises a first indicator and first prompt information, the first indicator indicates a connection status between the first electronic device and the satellite, and the first prompt information is used to prompt the user to maintain or adjust a current posture of holding the first electronic device to align with the satellite device; and/or the electronic device displays a first capsule, wherein the first capsule comprises a connection status between the first electronic device and the satellite; and
when the electronic device disconnects the satellite communication connection from the satellite by using the satellite modem, the electronic device stops displaying the first widget or the first capsule.

17. A communication apparatus, wherein the apparatus comprises a cellular modem and a first application, and the cellular modem comprises a satellite modem, wherein
the satellite modem is configured to establish a satellite communication connection to a satellite;
the cellular modem is configured to receive a cellular signal, wherein the cellular signal comprises a first cellular signal type;
the cellular modem is further configured to determine whether the first cellular signal type is the same as a second cellular signal type in the electronic device;
the first application is configured to: if the first cellular signal type is the same as the second cellular signal type in the electronic device, prompt a user whether to switch to a first cellular network; and
the first application is further configured to: receive and respond to a first operation of the user, control the satellite modem to disconnect the satellite communication connection from the satellite, and control the cellular modem to switch to the first cellular network.

18. The apparatus according to claim 17, wherein the first application is specifically configured to: if the first cellular signal type is the same as the second cellular signal type, and a signal strength of the cellular signal is greater than a first threshold, prompt the user whether to switch to the first cellular network.

19. The apparatus according to claim 17 or 18, wherein the cellular modem is specifically configured to receive the cellular signal when the satellite communication connection of the electronic device is in an idle state.

20. The apparatus according to any one of claims 17 to 19, wherein the first application is specifically configured to: when the satellite communication connection of the electronic device is in the idle state, prompt the user whether to switch to the first cellular network.

21. The apparatus according to any one of claims 17 to 20, wherein the first application is specifically configured to: when the satellite communication connection of the electronic device is in the idle state, control the satellite modem to disconnect the satellite communication connection from the satellite, and control the cellular modem to switch to the first cellular network.

22. The apparatus according to any one of claims 17 to 21, wherein the second cellular signal type in the electronic device is a cellular signal type corresponding to a SIM card in the electronic device or a cellular signal type corresponding to an eSIM card in the electronic device.

23. The apparatus according to claim 19, wherein the satellite modem is further configured to send a first instruction to the cellular modem when the satellite communication connection of the electronic device is in the idle state; and
the cellular modem is specifically configured to receive the cellular signal in response to the first instruction.

24. The apparatus according to any one of claims 17 to 23, wherein when the satellite modem of the electronic device establishes the satellite communication connection to the satellite, both the satellite modem and the cellular modem are in a power-on state.

25. The apparatus according to any one of claims 17 to 24, wherein the electronic device further comprises a cellular wireless communication interface module, wherein
the cellular modem is further configured to send a first message to the cellular wireless communication interface module;
the cellular wireless communication interface module is configured to send the first message to the first application; and
the first application is specifically configured to prompt, in response to the first message, the user whether to switch to the cellular network.

26. The apparatus according to any one of claims 17 to 25, wherein the first application is a satellite setting application or a system setting device.

27. The apparatus according to any one of claims 17 to 26, wherein the electronic device further comprises the cellular wireless communication interface module, wherein
the first application is specifically configured to send a second message to the cellular wireless communication interface module in response to the first operation of the user;
the cellular wireless communication interface module is configured to send the second message to the cellular modem;
the cellular modem is further configured to send a second instruction to the satellite modem; and
the satellite modem is specifically configured to disconnect the satellite communication connection from the satellite in response to the second instruction.

28. The apparatus according to any one of claims 17 to 27, wherein when the satellite modem of the electronic device disconnects the satellite communication connection from the satellite, and the cellular modem of the electronic device switches to the first cellular network, the cellular modem is in the power-on state, and the satellite modem is in a power-off state or the power-on state.

29. The apparatus according to any one of claims 19 to 21, wherein that the satellite communication connection of the electronic device is in the idle state comprises: there is no to-be-transmitted data between the electronic device and the satellite.

30. The apparatus according to claim 29, wherein that the satellite communication connection of the electronic device is in the idle state comprises: the electronic device does not establish a satellite call with another device by using the satellite, or the electronic device does not send an SMS message to another electronic device by using the satellite, or the electronic device does not receive, by using the satellite, an SMS message sent by another electronic device.

31. An electronic device, wherein the electronic device comprises one or more processors and one or more memories; the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 16.

32. A communication apparatus, wherein the apparatus comprises a satellite modem, a cellular modem, and an interface circuit, the interface circuit is configured to receive code instructions and transmit the code instructions to the satellite modem and/or the cellular modem, and when the satellite modem and/or the cellular modem run/runs the code instructions, the electronic device is enabled to perform the method according to any one of claims 1 to 16.

33. A computer-readable storage medium, comprising computer instructions, wherein when the computer instructions are run on an electronic device, the electronic device is enabled to perform the method according to any one of claims 1 to 16.
